# EUROPEAN PATENT SPECIFICATION

(11) **EP 3 902 182 B1**
(45) Date of publication and mention of the grant of the patent: **06.03.2024**
(21) Application number: 20739088.1
(22) Date of filing: 02.01.2020
(51) Int. Cl.: H04L 5/00

(54) **DOWNLINK CHANNEL TRANSMISSION METHOD AND APPARATUS**
DOWNLINK-KANAL-ÜBERTRAGUNGSVERFAHREN UND -VORRICHTUNG
PROCÉDÉ ET APPAREIL DE TRANSMISSION DE CANAL DE LIAISON DESCENDANTE

(30) Priority: 10.01.2019 CN 201910024353
(43) Date of publication of application: 27.10.2021
(73) Proprietor: Huawei Technologies Co., Ltd., Longgang Shenzhen, Guangdong 518129 (CN)
(72) Inventor: SHAO, Jiafeng, Shenzhen, Guangdong 518129 (CN); GUAN, Lei, Shenzhen, Guangdong 518129 (CN); LYU, Yongxia, Shenzhen, Guangdong 518129 (CN)
(74) Representative: Gill Jennings & Every LLP
(86) International application number: PCT/CN2020/070070
(87) International publication number: WO 2020/143524

(56) References cited:
- WO-A1-2021/127840
- ERICSSON: "On beam indication, measurement, and reporting", 3GPP DRAFT; R1-1718433 ON BEAM INDICATION, MEASUREMENT, AND REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG1, no. Prague, Czech Republic; 20171009 - 20171013 8 October 2017 (2017-10-08), XP051341615, Retrieved from the Internet: URL:http://www.3gpp.org/ftp/Meetings_3GPP_ SYNC/RAN1/Docs/ [retrieved on 2017-10-08]
- CATT: "Multi-TRP/panel transmission enhancement for Rel-16", 3GPP DRAFT; R1-1812635, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 November 2018 (2018-11-11), XP051554591, Retrieved from the Internet: URL:http://www.3gpp.org/ftp/Meetings%5F3GP P%5FSYNC/RAN1/Docs/R1%2D1812635%2Ezip [retrieved on 2018-11-11]

## Description

### TECHNICAL FIELD

This application relates to the communications field, and in particular, to a downlink channel transmission method and apparatus in the communications field.

### BACKGROUND

A network device configures, by using higher layer signaling and for a control resource set (control resource set, CORESET) for monitoring a physical downlink control channel (physical downlink control channel, PDCCH), a value of a transmission configuration indicator (transmission configuration indicator, TCI) corresponding to the PDCCH. When detecting the PDCCH, a terminal device may determine, based on the CORSET in which the PDCCH is located, the TCI corresponding to the PDCCH. Further, the network device may also configure, for the CORESET for monitoring the PDCCH, an indication field of the TCI corresponding to the PDCCH. The TCI includes a quasi co-location (quasi colocation, QCL) relationship. The QCL relationship is a correspondence between one or two downlink reference signals and a demodulation reference signal (demodulation reference signal, DMRS) of a physical downlink shared channel (physical downlink shared channel, PDSCH). The terminal device may determine, based on the correspondence and an indication field of a TCI corresponding to a PDCCH, a TCI corresponding to the PDSCH indicated by DCI carried on the PDCCH.

If there is no TCI indication field in the downlink control information (downlink control information, DCI) (namely, the DCI carried on the PDCCH) for scheduling the PDSCH, the terminal device cannot directly determine, based on the TCI indication field, the TCI corresponding to the PDSCH. In this case, the terminal device may assume that the TCI of the physical downlink shared channel (physical downlink shared channel, PDSCH) is the same as the TCI of the PDCCH. In other words, the TCI corresponding to the PDCCH that carries the DCI that indicates the PDSCH is used as the TCI of the PDSCH, to receive data on the PDSCH.

However, in a transmission scenario with a plurality of transmission/reception points (Tx/Rx point, TRP), a PDCCH may be repeatedly transmitted by the plurality of TRPs. As a result, a terminal device receives a plurality of PDCCHs respectively sent by the plurality of TRPs, and the plurality of PDCCHs carry same DCI. When the DCI carried on the plurality of PDCCHs indicates a receiving status of a same PDSCH, if there is no TCI indication field in the DCI for scheduling the PDSCH, how the terminal device determines a TCI corresponding to the PDSCH is an urgent problem to be resolved.

ERICSSON: "On beam indication, measurement, and reporting", 3GPP DRAFT, R1-1718433, describes further building on established Transmission Configuration Indictor framework, L1-RSRP measurement and reporting on SS blocks. CATT: "Multi-TRP/panel transmission enhancement for Rel-16"; 3GPP DRAFT, R1-1812635, describes views on aspects needed to be considered for supporting multi-TRP /panel transmission in Rel-16.

### SUMMARY

This application provides a downlink channel transmission method and apparatus, to determine a TCI corresponding to a downlink channel, thereby helping improve reliability of downlink channel transmission.

According to a first aspect, a downlink channel transmission method is provided. The method includes: A terminal device receives at least two physical downlink control channels PDCCHs on at least two control information resources, where the at least two PDCCHs carry same downlink control information DCI, and the DCI is used to indicate a time-frequency resource corresponding to a first downlink channel. The terminal device obtains at least two transmission configuration indicators TCIs corresponding to the at least two control information resources, and determines a target TCI in the at least two TCIs, where the target TCI is a TCI corresponding to the first downlink channel. The terminal device receives the first downlink channel based on the DCI and the target TCI.

In the downlink channel transmission method in this embodiment of this application, when at least two network devices send, to the terminal device by using the at least two control information resources, the PDCCHs that carry the same DCI, the terminal device determines the target TCI in the at least two TCIs according to a specific rule, where the target TCI is used for transmission of the first downlink channel indicated by the DCI. As a result, a problem that when a plurality of control information resources correspond to a plurality of TCIs, the terminal device cannot accurately determine the TCI corresponding to the first downlink channel is resolved, thereby helping improve reliability of downlink channel transmission, so that system performance is improved.

It should be understood that the first downlink channel may be a PDSCH, may be a PDCCH, or may be any other downlink channel. The control information resource is used to indicate a time/frequency domain resource used to transmit the PDCCH, for example, a control resource set (control-resource set, CORESET) or another time/frequency domain resource used to carry the PDCCH. The control information resource may overlap or may not overlap the time-frequency resource and/or a frequency domain resource on which the first downlink channel is located. Optionally, the control information resource may alternatively overlap a time-frequency resource and/or a frequency domain resource on which an uplink channel is located. Whether the control information resource overlaps the time domain resource or the frequency domain resource is not limited in this application.

With reference to the first aspect, in some implementations of the first aspect, that the terminal device determines a target TCI in the at least two TCIs includes: The terminal device determines the target TCI in the at least two TCIs based on at least one of the following information: identifiers of search spaces in which the at least two PDCCHs are located; types of search spaces in which the at least two PDCCHs are located; monitoring periodicities corresponding to the at least two PDCCHs; quantities of the control information resources corresponding to the at least two PDCCHs; time domain positions of the control information resources corresponding to the at least two PDCCHs; indexes of PDCCH candidates corresponding to the at least two PDCCHs; indexes of control resource elements CCEs corresponding to the at least two PDCCHs; indexes of resource element groups REGs corresponding to the at least two PDCCHs; radio network temporary identifiers RNTIs corresponding to the at least two PDCCHs; time differences between transmission times of the at least two PDCCHs and a transmission time of the first downlink channel; indexes of the control information resources of the at least two PDCCHs; or indexes of the at least two TCIs.

Specifically, a first network device and the terminal device may determine the target TCI according to a specific rule in an implicit manner. In this way, the first network device and the terminal device can accurately determine the target TCI, thereby improving reliability of transmitting the first downlink channel. In addition, a quantity of bits of the DCI sent by the network device to the terminal device may not be increased, so that demodulation performance of the DCI is improved.

In a possible implementation, the terminal device may alternatively perform comprehensive determining with reference to the plurality of foregoing cases, to ensure that a TCI is finally selected as the target TCI. The following describes in detail a method in which the plurality of cases are combined. The method may include the following steps:
Step 1: A terminal device determines a candidate TCI based on a case A.
Step 2: If the candidate TCI includes one TCI, the terminal device determines the candidate TCI as a target TCI. If the candidate TCI includes a plurality of TCIs, the terminal device does not consider the case corresponding to step 1, and may determine a new candidate TCI in the candidate TCIs based on a case B that is other than the case corresponding to step 1. If the new candidate TCI includes a plurality of TCIs, the terminal device performs step 1 again. This process continues until a unique target TCI is determined. It may be understood that each case is used only once to sift out the candidate TCI. After a case is used once, one or more of other cases that are not used for determining are used to determine the candidate TCI.

It should be understood that the case A is different from the case B.

With reference to the first aspect, in some implementations of the first aspect, before the terminal device determines the target TCI in the at least two TCIs, the method further includes: The terminal device receives higher layer signaling, where the higher layer signaling is used to indicate the target TCI.

Specifically, the target TCI corresponding to the first downlink channel may be indicated to the terminal device in an explicit manner. The first network device may send the higher layer signaling to the terminal device to indicate the target TCI. However, it should be understood that the target TCI is still one of the at least two TCIs. Because the target TCI (namely, a first TCI) corresponds to a first control information resource, this is equivalent to semi-statically configuring the first control information resource corresponding to the first downlink channel for the terminal device, that is, semi-statically configuring the first network device to send the first downlink channel to the terminal device. In this embodiment, the higher layer signaling is sent by the first network device to the terminal device. However, it should be understood that, in specific implementation, the higher layer signaling may alternatively be sent by another network device or another node to the terminal device. This is not limited in this embodiment of this application. The higher layer signaling may be configured for a serving cell, may be configured for a HARQ process ID, may be configured for a codeword, or may be configured for DCI. This is also not limited in this embodiment of this application.

With reference to the first aspect, in some implementations of the first aspect, the DCI does not carry indication information used to indicate the TCI corresponding to the first downlink channel.

In other words, a 1^{st} control information resource in the at least two control information resources is not configured with the indication information used to indicate the TCI corresponding to the first downlink channel. Alternatively, a format of the first DCI is a first format, for example, the first format is a DCI format 1_0. Alternatively, any one of the at least two control information resources is not configured with the indication information used to indicate the TCI corresponding to the first downlink channel. Alternatively, a last control information resource in the at least two control information resources is not configured with the indication information used to indicate the TCI corresponding to the first downlink channel. Alternatively, a plurality of control information resources in the at least two control information resources are not configured with the indication information used to indicate the TCI corresponding to the first downlink channel.

It should be understood that, for a multi-TRP transmission scenario, the control information resource corresponding to sending of the PDCCH may not be configured with a TCI indication field. Because the same DCI needs to be sent, the sent DCI does not include the TCI indication field regardless of whether the control information resources corresponding to the PDCCHs are configured with the TCI indication field.

It should further be understood that the 1^{st} control information resource may be understood as a control information resource with an earliest start symbol, and/or with an earliest end symbol, and/or with a slot index in time domain. If start symbols and/or end symbols and/or slot indexes of the at least two control information resources are the same, the 1^{st} control information resource may be understood as a control information resource with a smallest frequency domain resource (for example, a REG index or a CCE index).

With reference to the first aspect, in some implementations of the first aspect, a time difference between a transmission time of a PDCCH corresponding to the target TCI and the transmission time of the first downlink channel is greater than or equal to a first threshold.

It should be understood that, in this embodiment of this application, to ensure correct downlink channel transmission, the time difference between the transmission time of the PDCCH and the transmission time of the first downlink channel needs to be greater than or equal to a scheduling threshold, which is referred to as the first threshold in this application. Therefore, the time difference between the transmission time of the PDCCH corresponding to the target TCI selected by the terminal device and the transmission time of the first downlink channel needs to be greater than or equal to the first threshold. The first threshold may be predefined, or may be configured by the network device for the terminal device by using signaling, or may be reported by the terminal device. This is not limited in this embodiment of this application.

With reference to the first aspect, in some implementations of the first aspect, a time difference between a transmission time of a PDCCH that is last transmitted in the at least two PDCCHs and the transmission time of the first downlink channel is greater than or equal to a second threshold, or a time difference between a transmission time of a PDCCH that is first transmitted in the at least two PDCCHs and the transmission time of the first downlink channel is greater than or equal to the second threshold.

The second threshold may be equal to the first threshold. The second threshold may be predefined, or may be configured by the network device for the terminal device by using signaling, or may be reported by the terminal device. This is not limited in this embodiment of this application.

The first transmission may be understood as that a PDCCH is transmitted on a control information resource with an earliest start symbol, and/or with an earliest end symbol, and/or with a lowest slot index in time domain. If start symbols and/or end symbols and/or slot indexes of the at least two control information resources are the same, the first transmission may be understood as that a PDCCH is transmitted on a control information resource with a smallest frequency domain resource (for example, a REG index or a CCE index). Similarly, the last transmission may be understood as that a PDCCH is transmitted on a control information resource with a latest start symbol, and/or with a latest end symbol, and/or with a highest slot index in time domain. If start symbols and/or end symbols and/or indexes of the at least two control information resources are the same, the first transmission may be understood as that a PDCCH is transmitted on a control information resource with a largest frequency domain resource (for example, a REG index or a CCE index).

With reference to the first aspect, in some implementations of the first aspect, the method further includes: The terminal device sends capability information, where the capability information is used to indicate that the terminal device is capable of receiving at least two PDCCHs; and/or the terminal device receives first configuration information, where the first configuration information is used to configure the terminal device to receive at least two PDCCHs.

It should be understood that the network device may send the first configuration information to the terminal device based on the capability information reported by the terminal device, or may send the first configuration information to the terminal device not based on the capability information reported by the terminal device (or when the terminal device does not report the capability information). It should be understood that a repetition quantity of the at least two PDCCHs may be configured by using the higher layer signaling, or may be predefined. In this embodiment, the terminal device reports the capability information to the network device, so that the network device can flexibly configure, based on a requirement, whether to repeatedly transmit the PDCCHs, thereby flexibly adapting to a plurality of different scenarios.

With reference to the first aspect, in some implementations of the first aspect, that the terminal device determines a target TCI in the at least two TCIs includes: The terminal device determines the target TCI in the at least two TCIs when at least one of the following conditions is satisfied: an RNTI used to scramble the at least two PDCCHs is a first RNTI; a search space corresponding to the at least two PDCCHs is a first search space; a format of the DCI is a first DCI format; the at least two control information resources belong to a first control information resource group; or a bit status of a priority bit field of the DCI is a first bit status.

Specifically, the terminal device may determine, by using the method in this embodiment of this application, the TCI corresponding to the first downlink channel, only when at least one of the foregoing conditions is satisfied. The first RNTI, the first search space, the first format, the first control information resource group, or the first bit status may be predefined, or may be configured by the network device for the terminal device by using the higher layer signaling.

With reference to the first aspect, in some implementations of the first aspect, the method further includes: The terminal device receives second configuration information, where the second configuration information is used to configure at least one of the first RNTI, the first search space, the first DCI format, the first control information resource group, or the bit status of the priority bit field of the DCI.

Optionally, the terminal device may alternatively determine, based on the time-frequency resource that is indicated by the DCI and that is of the first downlink channel, whether to use the method in this embodiment of this application to determine the TCI corresponding to the first downlink channel. Specifically, the terminal device may determine the target TCI in the at least two TCIs by using the method in this embodiment of this application when the time-frequency resource of the first downlink channel satisfies at least one of the following conditions: a resource index of the first downlink channel belongs to a first index set; a time domain resource length of the first downlink channel belongs to a first time domain length; or a transmission time offset of the transmission time of the first downlink channel belongs to a first offset set.

With reference to the first aspect, in some implementations of the first aspect, the DCI includes first indication information, where the first indication information is used to indicate one of the at least two TCIs. That the terminal device determines a target TCI in the at least two TCIs includes: The terminal device determines the target TCI based on the first indication information.

For example, the network device may introduce a one-bit indication field into the DCI, or set an indication field of the TCI to be one bit, to indicate the target TCI. For example, a is used to indicate that the target TCI is the first TCI corresponding to the first control information resource, and 1 is used to indicate that the target TCI is a second TCI corresponding to a second control information resource. Alternatively, 1 is used to indicate that the target TCI is the first TCI corresponding to the first control information resource, and a is used to indicate that the target TCI is a second TCI corresponding to a second control information resource. After receiving the DCI, the terminal device may directly determine, based on the one-bit indication field in the DCI, the target TCI corresponding to the first downlink channel.

According to a second aspect, another downlink channel transmission method is provided. The method includes: A first network device determines a TCI corresponding to a physical downlink control channel PDCCH as a target TCI corresponding to a first downlink channel, and determines, based on a correspondence between the target TCI and first information, the first information corresponding to the PDCCH. The first network device sends the PDCCH on a control information resource based on the first information and the target TCI, where the PDCCH carries downlink control information DCI. The first network device sends the first downlink channel based on the DCI and the target TCI.

With reference to the second aspect, in some implementations of the second aspect, the first information is at least one of the following information: an identifier of a search space in which the PDCCH is located; a type of a search space in which the PDCCH is located; a monitoring periodicity corresponding to the PDCCH; a quantity of control information resources corresponding to the PDCCH; a time domain position of a control information resource corresponding to the PDCCH; an index of a PDCCH candidate corresponding to the PDCCH; an index of a control resource element CCE corresponding to the PDCCH; an index of a resource element group REG corresponding to the PDCCH; a radio network temporary identifier RNTI corresponding to the PDCCH; a time difference between a transmission time of the PDCCH and a transmission time of the first downlink channel; an index of the control information resource of the PDCCH; or an index of the TCI.

With reference to the second aspect, in some implementations of the second aspect, the DCI does not carry indication information used to indicate a TCI corresponding to the first downlink channel.

With reference to the second aspect, in some implementations of the second aspect, the time difference between the transmission time of the PDCCH and the transmission time of the first downlink channel is greater than or equal to a first threshold.

With reference to the second aspect, in some implementations of the second aspect, the method further includes: The first network device receives capability information, where the capability information is used to indicate that a terminal device is capable of receiving at least two PDCCHs; and/or the first network device sends first configuration information, where the first configuration information is used to configure the terminal device to receive at least two PDCCHs.

With reference to the second aspect, in some implementations of the second aspect, that a first network device determines a TCI corresponding to a physical downlink control channel PDCCH as a target TCI corresponding to a first downlink channel includes: The first network device determines the TCI corresponding to the PDCCH as the target TCI when at least one of the following conditions is satisfied: an RNTI used to scramble the PDCCH is a first RNTI; a search space corresponding to the PDCCH is a first search space; a format of the DCI is a first DCI format; the control information resource belongs to a first control information resource group; or a bit status of a priority bit field of the DCI is a first bit status.

With reference to the second aspect, in some implementations of the second aspect, the method further includes: The first network device sends second configuration information, where the second configuration information is used to configure at least one of the first RNTI, the first search space, the first DCI format, the first control information resource group, or the bit status of the priority bit field of the DCI.

According to a third aspect, another downlink channel transmission method is provided. The method includes: A first network device determines a TCI corresponding to a physical downlink control channel PDCCH as a target TCI corresponding to a first downlink channel. The first network device sends higher layer signaling, where the higher layer signaling is used to indicate the target TCI. The first network device sends the PDCCH on a control information resource based on the target TCI, where the PDCCH carries downlink control information DCI. The first network device sends the first downlink channel based on the DCI and the target TCI.

With reference to the third aspect, in some implementations of the third aspect, the DCI does not carry indication information used to indicate a TCI corresponding to the first downlink channel.

With reference to the third aspect, in some implementations of the third aspect, a time difference between a transmission time of the PDCCH and a transmission time of the first downlink channel is greater than or equal to a first threshold.

With reference to the third aspect, in some implementations of the third aspect, the method further includes: The first network device receives capability information, where the capability information is used to indicate that a terminal device is capable of receiving at least two PDCCHs; and/or the first network device sends first configuration information, where the first configuration information is used to configure the terminal device to receive at least two PDCCHs.

With reference to the third aspect, in some implementations of the third aspect, that a first network device determines a TCI corresponding to a physical downlink control channel PDCCH as a target TCI corresponding to a first downlink channel includes: The first network device determines the TCI corresponding to the PDCCH as the target TCI when at least one of the following conditions is satisfied: an RNTI used to scramble the PDCCH is a first RNTI; a search space corresponding to the PDCCH is a first search space; a format of the DCI is a first DCI format; the control information resource belongs to a first control information resource group; or a bit status of a priority bit field of the DCI is a first bit status.

With reference to the third aspect, in some implementations of the third aspect, the method further includes: The first network device sends second configuration information, where the second configuration information is used to configure at least one of the first RNTI, the first search space, the first DCI format, the first control information resource group, or the bit status of the priority bit field of the DCI.

According to a fourth aspect, another downlink channel transmission method is provided. The method includes: A first network device determines a TCI corresponding to a physical downlink control channel PDCCH as a target TCI corresponding to a first downlink channel. The first network device sends the PDCCH on a control information resource based on the target TCI, where the PDCCH carries downlink control information DCI, the DCI carries first indication information, and the first indication information is used to indicate the target TCI. The first network device sends the first downlink channel based on the DCI and the target TCI.

According to a fifth aspect, a downlink channel transmission apparatus is provided. The apparatus has a function of implementing the behavior of the terminal device in the foregoing methods. The function may be implemented by hardware, or may be implemented by hardware by executing corresponding software. The hardware or software includes one or more modules corresponding to the function. The module may be software and/or hardware.

In a possible design, a structure of the apparatus includes a receiver and a processor. The receiver is configured to support the apparatus in receiving at least two physical downlink control channels PDCCHs on at least two control information resources, and receiving the first downlink channel based on the DCI and the target TCI that is determined by the processor. The processor obtains at least two transmission configuration indicators TCIs corresponding to the at least two control information resources, and determines the target TCI in the at least two TCIs.

According to a sixth aspect, another downlink channel transmission apparatus is provided. The apparatus has a function of implementing the behavior of the network device in the foregoing methods. The function may be implemented by hardware, or may be implemented by hardware by executing corresponding software. The hardware or software includes one or more modules corresponding to the function.

In a possible design, a structure of the apparatus includes a processor and a transmitter. The processor is configured to support a network device in performing the corresponding function in the foregoing methods. The transmitter is configured to support communication between the network device and a terminal device, for example, sending the PDCCH on a control information resource based on the first information and the target TCI that is determined by the processing unit, where the PDCCH carries downlink control information DCI. The network device may further include a memory. The memory is configured to be coupled to the processor, and store a necessary program instruction and data of the network device.

According to a seventh aspect, an embodiment of this application further provides a computer-readable storage medium, including computer software instructions. When the computer software instructions are run on an information indication apparatus, the downlink channel transmission apparatus is enabled to perform the method in any one of the foregoing aspects or the possible implementations of the foregoing aspects.

According to an eighth aspect, an embodiment of this application further provides a computer program product including instructions. When the computer program product is run on an information indication apparatus, the downlink channel transmission apparatus is enabled to perform the method in any one of the foregoing aspects or the possible implementations of the foregoing aspects.

According to a ninth aspect, an embodiment of this application provides a chip system. The chip system includes a processor, and may further include a memory, and is configured to implement a function of the network device or the terminal device in the foregoing methods. The chip system may include a chip, or may include a chip and another discrete component.

According to a tenth aspect, an embodiment of this application further provides a communications system, where the communications system includes the terminal device described in the third aspect or a downlink channel transmission apparatus that supports a terminal device in implementing the method described in the first aspect, and the network device described in the fourth aspect or a downlink channel transmission apparatus that supports a network device in implementing the method described in the second aspect.

In addition, for technical effects brought by the design manners of any one of the foregoing aspects, refer to technical effects brought by different design manners of the first aspect and the second aspect. Details are not described herein.

In the embodiments of this application, names of the terminal device, the network device, and the downlink channel transmission apparatus constitute no limitation on the devices. In an actual implementation, these devices may appear with other names. Provided that functions of the devices are similar to those in the embodiments of this application, the devices fall within the scope of the claims of this application and their equivalent technologies.

### BRIEF DESCRIPTION OF DRAWINGS

FIG. 1 is a schematic diagram of an application scenario according to an embodiment of this application;
FIG. 2 is a schematic flowchart of a downlink channel transmission method according to an embodiment of this application;
FIG. 3 is a schematic block diagram of a downlink channel transmission apparatus according to an embodiment of this application;
FIG. 4 is a schematic block diagram of another downlink channel transmission apparatus according to an embodiment of this application;
FIG. 5 is a schematic block diagram of a network device according to an embodiment of this application; and
FIG. 6 is a schematic block diagram of a terminal device according to an embodiment of this application.

### DESCRIPTION OF EMBODIMENTS

The following describes technical solutions in this application with reference to the accompanying drawings.

The technical solutions of embodiments of this application may be used in various communications systems, for example, a global system for mobile communications (global system for mobile communications, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (Universal Mobile Telecommunication System, UMTS), a worldwide interoperability for microwave access (Worldwide Interoperability for Microwave Access, WiMAX) communications system, a future 5th generation (5th generation, 5G) system, or a new radio (new radio, NR) system.

The terminal device in the embodiments of this application may be user equipment, an access terminal, a subscriber unit, a subscriber station, a mobile station, a mobile station, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), a terminal device in an NR communications system, or the like. This is not limited in the embodiments of this application.

By way of example rather than limitation, in the embodiments of the present invention, the terminal device may alternatively be a wearable device. The wearable device may also be referred to as a wearable intelligent device, and is a generic term for wearable devices such as glasses, gloves, watches, clothes, and shoes that are developed by applying wearable technologies to intelligent designs of daily wear. The wearable device is a portable device that can be directly worn on a body or integrated into clothes or an accessory of a user. The wearable device is not only a hardware device, but implements powerful functions through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with another device such as a smartphone, for example, various smart bands or smart accessories for monitoring physical signs.

The network device in the embodiments of this application may be a device configured to communicate with a terminal device. The network device may be a base transceiver station (base transceiver station, BTS) in a global system for mobile communications (global system for mobile communications, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (evolved NodeB, eNB or eNodeB) in an LTE system, or a radio controller in a cloud radio access network (cloud radio access network, C-RAN) scenario. Alternatively, the network device may be a relay station, an access point, a vehicle-mounted device, a wearable device, a network device in a future 5G network, a network device in a future evolved PLMN network, a new generation NodeB (new generation NodeB, gNodeB) in an NR system, or the like. This is not limited in the embodiments of this application.

In addition, in the embodiments of this application, the network device provides a service for a cell, and the terminal device communicates with the network device by using a transmission resource (for example, a frequency domain resource or a spectrum resource) used in the cell. The cell may be a cell corresponding to the network device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have small coverage and low transmit power, and are applicable to providing a high-rate data transmission service.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing by using a process (process). For example, the operating system is a Linux operating system, a Unix operating system, an Android operating system, an iOS operating system, or a Windows operating system. The application layer includes applications such as a browser, an address book, word processing software, and instant communications software. In addition, a specific structure of an execution body of a method provided in the embodiments of this application is not specifically limited in the embodiments of this application, provided that a program that records code of the method provided in the embodiments of this application can be run to perform communication based on the method provided in the embodiments of this application. For example, the execution body of the method provided in the embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry an instruction and/or data.

The following first describes related basic knowledge of this application.

Mobile communications technologies have profoundly changed people's life, and people's pursuit of a mobile communications technology having higher performance has never ceased. To cope with explosive growth of mobile data traffic in the future, massive mobile communications device connections, and various emerging new services and application scenarios, a fifth generation (5th Generation, 5G) mobile communications system emerges. The International Telecommunication Union (International Telecommunication Union, ITU) defines three application scenarios for the 5G mobile communications system and a future mobile communications system: enhanced mobile broadband (Enhanced Mobile Broadband, eMBB), ultra-reliable low-latency communication (Ultra-Reliable and Low-Latency Communications, URLLC), and massive machine-type communications (Massive Machine-Type Communications, mMTC).

Typical URLLC services include tactile interaction applications such as wireless control in an industrial manufacturing or production process, motion control and remote repair of a self-driving car and an unmanned aerial vehicle, and remote surgery. These services are mainly characterized by requirements for ultra-high reliability and a low latency, a relatively small data transmission volume, and burstiness. Typical mMTC services include smart grid power distribution automation, a smart city, and the like. These services are mainly characterized by a huge quantity of web-connected devices, a relatively small data transmission volume, and insensitivity of data to a transmission latency. mMTC terminals need to satisfy a requirement for low costs and a very long standby time. Typical eMBB services include an ultra-high definition video, augmented reality (augmented reality, AR), virtual reality (virtual reality, VR), or the like. These services are mainly characterized by a large data transmission volume and a very high transmission rate.

It should be understood that an NR system supports various time scheduling units, and a length of the time scheduling unit may be one or more time domain symbols. The time domain symbol may be an orthogonal frequency division multiplexing (orthogonal frequency division multiplexing, OFDM) symbol. The OFDM symbol may use transform precoding (transform precoding), or may not use transform precoding. If the OFDM symbol uses the transform precoding, the OFDM symbol may also be referred to as single-carrier frequency division multiplexing (single carrier-frequency division multiplexing, SC-FDM). The NR system includes slots (slot), and one slot may include 14 symbols. The NR system further supports a plurality of subcarrier spacings. In different subcarrier spacings, a slot may correspond to different time lengths. For example, when a subcarrier spacing is 15 kHz, a time length corresponding to one slot may be 1 ms. For another example, when a subcarrier spacing is 30 kHz, a time length corresponding to one slot may be 0.5 ms. For another example, when a subcarrier spacing is 60 kHz, a time length corresponding to one slot may be 0.25 ms. For another example, when a subcarrier spacing is 120 kHz, a time length corresponding to one slot may be 0.125 ms. It should be understood that, because a quantity of symbols in one slot may be configured as a fixed value, for example, 14 symbols, a time length corresponding to the symbol may also change with a change of a subcarrier spacing.

A time/frequency domain resource includes a time domain resource and/or a frequency domain resource. The frequency domain resource may be one or more resource blocks (resource block, RB), or may be one or more resource elements (resource element, RE), or may be one or more carriers/cells, or may be one or more bandwidth parts (bandwidth part, BWP), or may be one or more RBs on one or more BWPs on one or more carriers, or may be one or more REs on one or more RBs on one or more BWPs on one or more carriers. The time domain resource may be one or more slots, or may be one or more symbols in one or more slots.

In a wireless communications system, a reference signal needs to be transmitted in both uplink data transmission (a terminal device sends data to a network device) and downlink data transmission (a network device sends data to a terminal device). This is because before performing data decoding, a receive end needs to perform channel estimation on a channel by using the reference signal, and then eliminates impact of a spatial channel on data by using a result of the channel estimation, to perform the decoding.

For downlink transmission, if the downlink transmission is based on dynamic scheduling, a terminal device receives downlink control information DCI that is used to indicate a PDSCH. The DCI carries indication information, where the indication information is used to indicate a time/frequency domain resource occupied by the PDSCH, a modulation scheme, and the like. When receiving the DCI, the terminal device may determine a resource on which the PDSCH is to be received. Further, after receiving the PDSCH, the terminal device may feed back a final decoding result to the network device. If the terminal device correctly receives the PDSCH, information fed back is an acknowledgment response (acknowledgment, ACK). If the terminal incorrectly receives the PDSCH, information fed back is a negative acknowledgment response (negative acknowledgment, NACK). The ACK and the NACK may be collectively referred to as hybrid automatic repeat request (hybrid automatic repeat request, HARQ) information in a communications system. Generally, the terminal device feeds back the HARQ information corresponding to the PDSCH, so that the network device can quickly retransmit the PDSCH to the terminal device after learning that the terminal device incorrectly receives the PDSCH, to ensure data transmission reliability.

For ease of understanding, the following first describes related terms in this specification.

### 1. Control resource element (control-channel element, CCE)

One PDCCH includes one or more CCEs. However, a quantity of CCEs specifically included in one PDCCH is described by using an aggregation level (aggregation level). For example, a correspondence between the CCE and the aggregation level may be shown in Table 1.

**Table 1**

| Aggregation level | Quantity of control resource elements |
|---|---|
| 1 | 1 |
| 2 | 2 |
| 4 | 4 |
| 8 | 8 |
| 16 | 16 |

### 2. Resource element group (resource element group, REG)

One CCE may include six resource element groups REGs. Herein, a resource corresponding to one REG is one RB in frequency domain, and is one OFDM symbol in time domain. In a CORESET, the REGs may be numbered first in frequency domain and then in time domain. In other words, a REG 0 is numbered from a 1^{st} symbol and the lowest resource block in the CORESET.

A mapping relationship between a CCE corresponding to a PDCCH and a REG is configurable. Herein, the CCE may be understood as a logical resource, and the REG may be understood as an actual resource. A mapping from the logical resource to the actual resource may be performed in a plurality of manners. However, for a specific CORESET, the CORESET corresponds to only one mapping manner that is from a CCE to a REG.

### 3. Control resource set (control resource set, CORESET)

A CORESET is a physical resource that includes a plurality of REGs. One CORESET may occupy one, two, or three symbols in time domain, and may occupy one or more resource blocks in frequency domain. The CORESET is configured by using higher layer signaling. One CORESET may include a plurality of search spaces, and one search space may correspond to at least one CORESET. Generally, one transmission configuration indicator (transmission configuration indicator, TCI) may be configured for one CORESET in a manner in which the TCI is predefined or a manner in which the TCI is configured by a network device by using higher layer signaling. A terminal device may determine, based on a CORESET in which a PDCCH is located, a TCI corresponding to the PDCCH.

### (4) Search space (search space)

A terminal device may monitor one or more search spaces, to obtain corresponding DCI. An identifier of each search space is associated with an identifier of one CORESET. The search space may be generally classified into a common search space (common search space, CSS) and a user-specific search space (UE-specific search space, USS).

A group of PDCCH candidates that can be monitored by a terminal device is defined as a PDCCH search space set (search space set). A type of the search space set may include a common search space set (common search space set) or a user-specific search space set (UE-specific search space set). The common search space set may further include a Type 0-PDCCH common search space set, a Type 0 A-PDCCH common search space set, a Type 1 -PDCCH common search space set, a Type 2-PDCCH common search space set, a Type 3-PDCCH common search space set, and the like.

### 5. Radio network identifier (radio network temporary identifier, RNTI)

Each PDCCH uses an RNTI to perform scrambling on cyclic redundancy check (cyclic redundancy check, CRC) of the PDCCH, and a terminal device may also distinguish between different PDCCHs by using the RNTI.

The RNTI may include a system information RNTI (system information RNTI, SI-RNTI), a random access RNTI (random access RNTI, RA-RNTI), a temporary cell RNTI (temporary cell RNTI, TC-RNTI), a paging RNTI (paging RNTI, P-RNTI), a cell RNTI (cell-RNTI, C RNTI), a configured scheduling RNTI (configured scheduling-RNTI, CS-RNTI), a modulation and coding scheme cell RNTI (modulation and coding scheme cell RNTI, MCS-C-RNTI), and the like. Generally, CRC of a PDCCH in a user-specific search space set may be scrambled only by using the C-RNTI, the CS-RNTI, and the MCS-C-RNTI.

### 6. DCI format (DCI format)

A DCI format may include a DCI format 1_0, a DCI format 1_1, a DCI format 1_2, a DCI format 0_0, a DCI format 0_1, a DCI format 0_2, and the like. A quantity of bits corresponding to the DCI format 1_2 is less than a quantity of bits corresponding to the DCI format 1_0, for example, less than or equal to 10 bits to 16 bits. A quantity of bits corresponding to the DCI format 0_2 is less than a quantity of bits corresponding to the DCI format 0_0, for example, less than or equal to 10 bits to 16 bits.

### 7. Transmission configuration indicator (transmission configuration indicator, TCI)

One TCI includes a quasi co-location (quasi co-location, QCL) relationship, and the relationship is a correspondence between one or two downlink reference signals and a demodulation reference signal DMRS of a downlink physical shared channel PDSCH. A TCI status indication field is an indication field used to indicate a TCI. The indication field may be in DCI, or may be in signaling of a MAC layer.

The foregoing quasi co-location relationship may be one of the following types.

Quasi co-location type A (QCL-Type A): In this type, a terminal device assumes that {a doppler shift (doppler shift), a doppler spread (doppler spread), an average delay (average delay), and a delay spread (delay spread)} of the downlink reference signal are the same as those of the DMRS of the PDSCH.

Quasi co-location type B (QCL-Type B): A terminal device assumes that {a doppler shift and a doppler spread} of the downlink reference signal are the same as those of the DMRS of the PDSCH.

Quasi co-location type C (QCL-Type C): A terminal device assumes that {an average delay and a delay spread} of the downlink reference signal are the same as those of the DMRS of the PDSCH.

Quasi co-location type D (QCL-Type D): A terminal device assumes that {a spatial receiving antenna parameter (spatial Rx parameter)} of the downlink reference signal is the same as that of the DMRS of the PDSCH.

It should be understood that higher layer signaling may include higher layer signaling trs-info and higher layer signaling repetition. The higher layer signaling trs-info is used to indicate that antenna ports corresponding to all NZP CSI-RS resources in a CSI-RS resource set are the same, and the higher layer signaling repetition is used to indicate on or off. If the higher layer signaling repetition indicates off or a network device does not send the higher layer signaling repetition to a terminal device, the terminal device does not assume that all the NZP CSI-RS resources in the resource set correspond to a same quantity of the antenna ports and a same downlink spatial transmission filter.

For example, a second downlink reference signal is configured. There may be the following five cases based on a specific configuration.
(1) For a periodic channel state information reference signal (channel state information reference signal, CSI-RS), if the periodic CSI-RS is configured on a non-zero power channel state information reference signal (non-zero power channel state information reference signal, NZP CSI-RS) by using higher layer signaling trs-info sent by a network device, a TCI status indication field may indicate a QCL type based on correspondences shown in Table 2.

**Table 2**

| TCI status indication field | First downlink reference signal | QCL type corresponding to the first downlink reference signal | Second downlink reference signal | QCL type corresponding to the second downlink reference signal |
|---|---|---|---|---|
| 1 | Synchronization signal block (synchronization signal block, SS block)/Broadcast channel block (physical broadcast channel block, PBCH block) | QCL-Type C | SS/PBCH block that is the same as that of the first downlink reference signal | QCL-Type D |
| 2 | SS/PBCH block | QCL-Type C | CSI-RS configured by using higher layer signaling repetition | QCL-Type D |

(2) For an aperiodic CSI-RS, if the aperiodic CSI-RS is configured on an NZP CSI-RS by using higher layer signaling trs-info, a TCI status indication field may indicate a QCL type based on a correspondence shown in Table 3.

**Table 3**

| TCI status indication field | First downlink reference signal | QCL type corresponding to the first downlink reference signal | Second downlink reference signal | QCL type corresponding to the second downlink reference signal |
|---|---|---|---|---|
| 1 | Periodic CSI-RS | QCL-Type A | Periodic CSI-RS that is the same as that of the first downlink reference signal | QCL-Type D |

(3) If a CSI-RS is not configured on an NZP CSI-RS by using higher layer signaling trs-info or higher layer signaling repetition that is sent by a network device, a TCI status indication field may indicate a QCL type based on correspondences shown in Table 4.

**Table 4**

| TCI status indication field | First downlink reference signal | QCL type corresponding to the first downlink reference signal | Second downlink reference signal | QCL type corresponding to the second downlink reference signal |
|---|---|---|---|---|
| 1 | CSI-RS configured by using higher-layer signaling trs-info | QCL-Type A | CSI-RS that is the same as that of the first downlink reference signal | QCL-Type D |
| 2 | CSI-RS configured by using higher-layer signaling trs-info | QCL-Type A | SS/PBCH block | QCL-Type D |
| 3 | CSI-RS configured by using higher-layer signaling trs-info | QCL-Type A | CSI-RS configured by using higher layer signaling repetition | QCL-Type D |
| 4 | CSI-RS configured by using higher-layer signaling trs-info | QCL-Type B | | |

(4) If a CSI-RS is configured on an NZP CSI-RS by using higher layer signaling repetition sent by a network device, a TCI status indication field may indicate a QCL type based on correspondences shown in Table 5.

**Table 5**

| TCI status indication field | First downlink reference signal | QCL type corresponding to the first downlink reference signal | Second downlink reference signal | QCL type corresponding to the second downlink reference signal |
|---|---|---|---|---|
| 1 | CSI-RS configured by using higher-layer signaling trs-info | QCL-Type A | CSI-RS that is the same as that of the first downlink reference signal | QCL-Type D |
| 2 | CSI-RS configured by using higher-layer signaling trs-info | QCL-Type A | CSI-RS configured by using higher layer signaling repetition | QCL-Type D |
| 3 | SS/PBCH block | QCL-Type C | SS/PBCH block that is the same as that of the first downlink reference signal | QCL-Type D |

(5) For a demodulation reference signal DMRS, a TCI status indication field may indicate a QCL type based on correspondences shown in Table 6.

**Table 6**

| TCI status indication field | First downlink reference signal | QCL type corresponding to the first downlink reference signal | Second downlink reference signal | QCL type corresponding to the second downlink reference signal |
|---|---|---|---|---|
| 1 | CSI-RS configured by using higher-layer signaling trs-info | QCL-Type A | CSI-RS that is the same as that of the first downlink reference signal | QCL-Type D |
| 2 | CSI-RS configured by using higher-layer signaling trs-info | QCL-Type A | CSI-RS configured by using higher layer signaling repetition | QCL-Type D |
| 3 | CSI-RS configured by using higher-layer signaling trs-info | QCL-Type A | CSI-RS that is the same as that of the first downlink reference signal | QCL-Type D |

For example, a second downlink reference signal is not configured. Table 2 to Table 6 include only the row corresponding to the TCI status indication field, the row corresponding to the first downlink reference signal, and the row corresponding to the QCL type corresponding to the first downlink reference signal.

To improve rate experience of a user in a cell, a multi-TRP transmission scenario is introduced in the NR. There may be ideal backhaul or non-ideal backhaul between the plurality of TRPs. The ideal backhaul means that there is no delay in exchanging information between the plurality of TRPs, that is, data or control information may be quickly and arbitrarily exchanged between the plurality of TRPs at any time. The non-ideal backhaul means that there is a delay in exchanging information between the plurality of TRPs, that is, the information cannot be quickly exchanged between the plurality of TRPs, or can only be slowly exchanged between the plurality of TRPs.

A typical multi-TRP transmission scenario may be as follows: A plurality of TRPs send PDCCHs carrying same DCI, and one of the plurality of TRPs sends a PDSCH. This is because introducing the plurality of TRPs to perform repetition DCI (repetition DCI) transmission helps obtain a diversity gain and improve PDCCH reliability. In addition, the PDSCH is transmitted by one of the TRPs (for example, a TRP with a best signal to interference plus noise ratio (signal to interference plus noise ratio, SINR)), so that appropriate spectral efficiency can be used for the PDSCH, and reliability of transmitting the PDSCH can also be ensured.

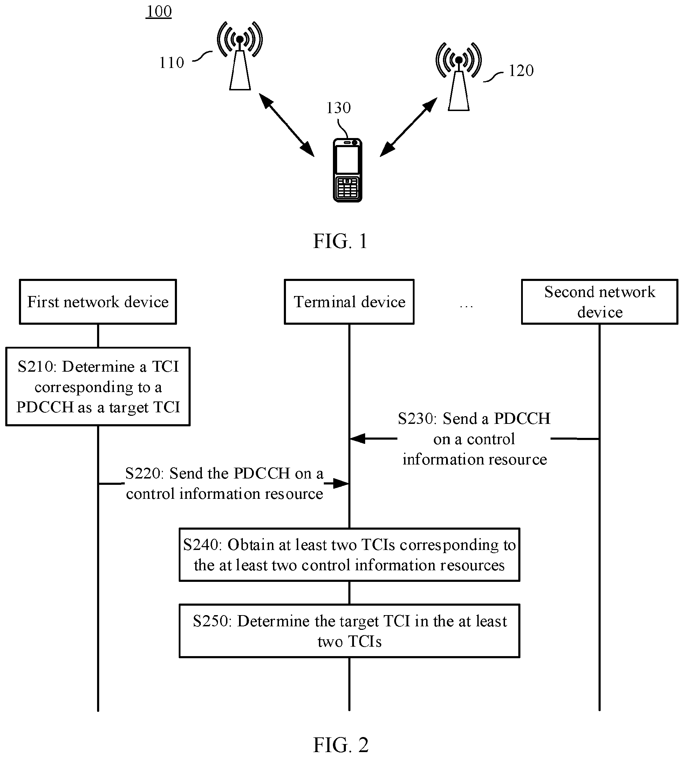

FIG. 1 shows an application scenario 100 according to an embodiment of this application. The application scenario 100 may include a first network device 110, a second network device 120, and a terminal device 130. The first network device 110 may send a PDCCH 1 to the terminal device 130, where the PDCCH 1 carries DCI 1. The DCI 1 is used to indicate a time-frequency resource corresponding to a first downlink channel (for example, a PDSCH, which may be one or more transport blocks, or may be one or more codewords). The second network device 120 may send a PDCCH 2 to the terminal device 130. The PDCCH 2 also carries the DCI 1, and the DCI 1 indicates the time-frequency resource of the same first downlink channel. In this case, the DCI is repeatedly transmitted, that is, the PDCCH 1 and the PDCCH 2 carry the same content. The PDCCH 1 and the PDCCH 2 may be sent on a same time-frequency resource, or may be sent on different time-frequency resources. This is not limited in this embodiment of this application.

Therefore, the terminal device 130 may receive the PDCCH 1 from the first network device 110 and the PDCCH 2 from the second network device 120 on a same time/frequency domain resource or different time/frequency domain resources. After obtaining the DCI 1 in the two PDCCHs, the terminal device 130 may decode, based on indication information in the DCI 1, the first downlink channel that is subsequently from the first network device 110, to obtain a decoding result of the first downlink channel.

It should be understood that, as an example, FIG. 1 shows two network devices and one terminal device. Optionally, the communications system 100 may include a plurality of network devices, and another quantity of terminal devices may be included within coverage of each network device. This is not limited in this embodiment of this application. Optionally, the wireless communications system 100 may further include another network entity such as a network controller and a mobility management entity. This is not limited in this embodiment of this application.

Generally, the network device may configure, by using higher layer signaling, a value of a TCI for a control information resource for monitoring the PDCCH. When detecting the PDCCH, the terminal device may determine, based on a CORSET in which the PDCCH is located, the TCI corresponding to the PDCCH. Further, the network device may also configure a TCI indication field for a CORESET for monitoring the PDCCH. The terminal device may determine, based on the TCI indication field in the DCI carried on the PDCCH, a TCI that corresponds to the first downlink channel and that is indicated by the DCI carried on the PDCCH.

If the network device does not configure the TCI indication field for the CORESET for monitoring the PDCCH, that is, there is no TCI indication field in the DCI (namely, the detected DCI on the PDCCH in the CORESET) for scheduling the first downlink channel, the terminal device cannot determine the TCI corresponding to the first downlink channel. In this case, the terminal device may assume that the TCI of the first downlink channel is the same as the TCI of the PDCCH, that is, use the TCI of the PDCCH as the TCI of the first downlink channel, to receive data on the first downlink channel.

However, in the foregoing application scenario 100 (that is, the multi-TRP transmission scenario), the DCI is repeatedly transmitted by the plurality of network devices by using the plurality of PDCCHs, and the first downlink channel is from one or more network devices (for example, the first network device 110) of the plurality of network devices. In this way, the terminal device receives the plurality of PDCCHs respectively sent by the plurality of network devices, where the plurality of PDCCHs carry the same DCI. In other words, in this scenario, receiving of the same first downlink channel may be indicated by using the plurality of PDCCHs. Because spatial address locations of the plurality of network devices relative to the terminal device are different, TCIs corresponding to different network devices may be different. The different network devices may send the PDCCHs on different CORESETs, and the CORESETs are configured to correspond to the different TCIs. The terminal device receives the PDCCHs that are sent, by using the different CORESETs, by the plurality of network devices. In this case, the terminal device cannot determine the TCI corresponding to the first downlink channel, and therefore cannot accurately receive the first downlink channel. As a result, reliability of transmitting the first downlink channel is affected.

In view of this, an embodiment of this application proposes a new downlink channel transmission method. A terminal device determines, according to a specific rule or based on an indication of a network device, a target TCI in a plurality of TCIs corresponding to a plurality of different CORESETs, to transmit the first downlink channel. This helps improve reliability of downlink channel transmission, thereby improving system performance.

FIG. 2 is a schematic flowchart of a downlink channel transmission method 200 according to an embodiment of this application. The method 200 may be used in the application scenario 100 shown in FIG. 1. However, this embodiment of this application is not limited thereto.

S210: A first network device determines a first TCI corresponding to a first PDCCH as a target TCI.

S220: The first network device sends the first PDCCH on a first control information resource, where the first PDCCH carries DCI. For example, the first PDCCH carries first DCI, where the first DCI is used to indicate a time-frequency resource corresponding to a first downlink channel. A TCI corresponding to the first downlink channel indicated by the first DCI is the target TCI.

S230: A second network device sends a second PDCCH on a second control information resource, where the second PDCCH carries the first DCI.

In this application scenario, more network devices may send PDCCHs on control information resources, where the PDCCHs carry the first DCI. Therefore, correspondingly, a terminal device may receive at least two physical downlink control channels PDCCHs on at least two control information resources. The at least two PDCCHs include the first PDCCH sent by the first network device on the first control information resource and the second PDCCH sent by the second network device on the second control information resource, and the at least two PDCCHs carry the same DCI, which is the first DCI.

S240: The terminal device may receive the at least two PDCCHs sent by at least two network devices on the at least two control information resources, to obtain at least two TCIs corresponding to the at least two control information resources.

S250: The terminal device determines the target TCI in the at least two TCIs, where the target TCI is the TCI corresponding to the first downlink channel.

It should be understood that S210 is performed before S220, but S230 may be performed before S220, or may be performed after S220, or may be performed simultaneously with S220. A sequence of S220 and S230 is not limited in this embodiment.

In an optional embodiment, the method further includes: The first network device may determine, based on a correspondence between the target TCI and first information, the first information corresponding to the first PDCCH, and the first network device sends the first PDCCH on the first control information resource based on the first information and the target TCI. In this way, in S250, the terminal device may determine the target TCI in the at least two TCIs based on the first information. In other words, the first network device and the terminal device may determine the target TCI based on the first information in an implicit manner. The first information may be predefined, or may be configured by the network device for the terminal device by using signaling.

In an optional embodiment, the method further includes: The first network device sends higher layer signaling, where the higher layer signaling is used to indicate the target TCI. Correspondingly, the terminal device receives the higher layer signaling sent by the first network device. In S250, the terminal device may directly determine the target TCI based on the higher layer signaling.

In the downlink channel transmission method in this embodiment of this application, when the at least two network devices send, to the terminal device by using the at least two control information resources, the PDCCHs that carry the same DCI, the terminal device determines the target TCI in the at least two TCIs according to a specific rule, where the target TCI is used for transmission of the first downlink channel indicated by the DCI. As a result, a problem that when a plurality of control information resources correspond to a plurality of TCIs, the terminal device cannot accurately determine the TCI corresponding to the first downlink channel is resolved, thereby helping improve reliability of downlink channel transmission, so that system performance is improved.

Further, the first network device or the second network device may send the first downlink channel to the terminal device based on the first DCI and the target TCI (for example, a TCI corresponding to the first control information resource). Correspondingly, the terminal device may receive the first downlink channel based on the first DCI and the target TCI. It should be understood that the network device herein that sends the first downlink channel may be one network device, or may be a plurality of network devices. This is not limited in this embodiment of this application. In a possible implementation, if the first network device determines the target TCI, and the second network device sends the first downlink channel, the first network device may send, to the second network device, indication information used to indicate the target TCI, so that the second network device sends the first downlink channel based on the target TCI.

For example, for ease of description, the following uses an example in which the at least two network devices include the first network device and the second network device for description. However, it should be understood that a quantity of the network devices that repeatedly transmit the PDCCH is not limited in this embodiment of this application.

Specifically, the first network device and the second network device send, to the terminal device, the PDCCHs that all carry the same DCI (namely, the first DCI). The first DCI is used to indicate the time-frequency resource corresponding to the first downlink channel, but the first DCI does not carry an indication field used to indicate the TCI of the first downlink channel. In this embodiment of this application, for example, the first network device and the second network device pre-negotiate and determine that the first network device determines, as the target TCI, the first TCI corresponding to the first PDCCH (namely, the corresponding first control information resource) sent by the first network device. It should be understood that, because spatial geographical locations of the plurality of network devices relative to the terminal device are different, TCIs corresponding to the different network devices are different. Therefore, the different network devices may correspond to different control information resources. In other words, the different network devices may send the PDCCHs by using the different control information resources. In other words, the first PDCCH is sent on the first control information resource, and the TCI corresponding to the first control information resource is the first TCI. The second PDCCH is sent on the second control information resource, and a TCI corresponding to the second control information resource is a second TCI that is different from the first TCI.

For example, the terminal device receives the first PDCCH from the first network device and the second PDCCH from the second network device. The first PDCCH is sent on the first control information resource, and the second PDCCH is sent on the second control information resource. The first control information resource corresponds to the first TCI, and the second control information resource corresponds to the second TCI. Therefore, after receiving the two PDCCHs, in addition to obtaining the first DCI carried on the two PDCCHs, the terminal device may further obtain the first TCI corresponding to the first control information resource and the second TCI corresponding to the second control information resource. Because the first DCI does not carry the indication field used to indicate the TCI of the first downlink channel, in this case, the terminal device may use one of the two TCIs to transmit the first downlink channel.

It should be understood that the first downlink channel may be a PDSCH, may be a PDCCH, or may be any other downlink channel. The control information resource is used to indicate a time/frequency domain resource used to transmit the PDCCH, for example, a control resource set (control-resource set, CORESET) or another time/frequency domain resource used to carry the PDCCH. The control information resource may overlap or may not overlap a time domain resource and/or a frequency domain resource on which the first downlink channel is located. Optionally, the control information resource may alternatively overlap a time-frequency resource and/or a frequency domain resource on which an uplink channel is located. Whether the control information resource overlaps the time-frequency resource or the frequency domain resource is not limited in this application. For ease of understanding, the control information resource is used as an example for detailed description in this application. However, this is merely a name of a time-frequency resource used to transmit the PDCCH. The name of the time-frequency resource is not limited in this embodiment of this application.

In an optional embodiment, the DCI does not carry indication information used to indicate the TCI corresponding to the first downlink channel.

In other words, the 1^{st} control information resource in the at least two control information resources is not configured with the indication information used to indicate the TCI corresponding to the first downlink channel. Alternatively, a format of the first DCI is a first format, for example, the first format is a DCI format 1_0. Alternatively, any one of the at least two control information resources is not configured with the indication information used to indicate the TCI corresponding to the first downlink channel. Alternatively, the last control information resource in the at least two control information resources is not configured with the indication information used to indicate the TCI corresponding to the first downlink channel. Alternatively, a plurality of control information resources in the at least two control information resources are not configured with the indication information used to indicate the TCI corresponding to the first downlink channel.

It should be understood that, for a multi-TRP transmission scenario, the control information resource corresponding to sending of the PDCCH is not configured with a TCI indication field. Because the same DCI needs to be sent, the sent DCI does not include the TCI indication field regardless of whether the control information resources corresponding to the PDCCHs are configured with the TCI indication field.

It should further be understood that the 1^{st} control information resource may be understood as a control information resource with an earliest start symbol, and/or with an earliest end symbol, and/or with a slot index in time domain. If start symbols and/or end symbols and/or slot indexes of the at least two control information resources are the same, the 1^{st} control information resource may be understood as a control information resource with a smallest frequency domain resource (for example, a REG index or a CCE index).

To ensure that understanding on a network device side and understanding on a terminal device side are consistent and are not prone to errors, in this embodiment of this application, a plurality of manners, for example, an implicit manner or an explicit manner, may be used to ensure that the target TCI determined by the terminal device and the target TCI determined by the first network device are the same. The following separately describes possible implementations.

In an optional embodiment, the first network device determines, based on the correspondence between the target TCI and the first information, the first information corresponding to the first PDCCH, and the first network device sends the first PDCCH on the first control information resource based on the first information and the target TCI. Correspondingly, that the terminal device determines the target TCI in the at least two TCIs includes: The terminal device determines the target TCI in the at least two TCIs based on the first information. Optionally, the first information is at least one of the following information:
identifiers of search spaces in which the at least two PDCCHs are located;
types of search spaces in which the at least two PDCCHs are located;
monitoring periodicities corresponding to the at least two PDCCHs;
quantities of the control information resources corresponding to the at least two PDCCHs;
time domain positions of the control information resources corresponding to the at least two PDCCHs;
indexes of PDCCH candidates corresponding to the at least two PDCCHs;
indexes of control resource elements CCEs corresponding to the at least two PDCCHs;
indexes of resource element groups REGs corresponding to the at least two PDCCHs;
radio network temporary identifiers RNTIs corresponding to the at least two PDCCHs;
time differences between transmission times of the at least two PDCCHs and a transmission time of the first downlink channel;
indexes of the control information resources of the at least two PDCCHs; or
indexes of the at least two TCIs.

Specifically, the first network device and the terminal device may determine the target TCI according to the specific rule in an implicit manner. In this way, the first network device and the terminal device can accurately determine the target TCI, thereby improving reliability of transmitting the first downlink channel. In addition, a quantity of bits of the DCI sent by the network device to the terminal device is not increased, so that demodulation performance of the DCI is improved.

The following describes, in detail and from a perspective of the terminal device, the first information based on cases.

**Case 1: The first information includes identifiers of search spaces in which the at least two PDCCHs are located.**

The terminal device determines, based on identifiers of at least two search spaces on the at least two control information resources on which the PDCCHs are located, the TCI corresponding to the first downlink channel. The identifiers of the at least two search spaces include an identifier of a first search space and an identifier of a second search space. Specifically, the identifier of the search space may be an index of the search space.

For example, the terminal device determines the target TCI based on a highest index of the search space. Correspondingly, the first network device determines the index of the search space based on the target TCI. To be specific, when sending the first PDCCH, the first network device sends the first PDCCH in the search space with the highest index, that is, an index of the first search space is the highest in indexes of the at least two search spaces. In this case, the terminal device determines that the index of the first search space is the highest in the at least two search spaces corresponding to the at least two PDCCHs, that is, the index of the first search space is higher than an index of the second search space. Then, the terminal device determines, based on a control information resource on which the first search space is located, the TCI corresponding to the first downlink channel. Further, the TCI corresponding to the first downlink channel is a TCI corresponding to the control information resource on which the first search space is located. It should be understood that a correspondence between the control information resource and the TCI may be predefined, or may be configured by the network device for the terminal device by using higher layer signaling. This is not limited in this embodiment.

For example, the terminal device determines the target TCI based on a lowest index of the search space. Correspondingly, the first network device determines the index of the search space based on the target TCI. To be specific, when sending the first PDCCH, the first network device sends the first PDCCH in the search space with the lowest index, that is, an index of the first search space is the lowest in indexes of the at least two search spaces. In this case, the terminal device determines that the index of the first search space is the lowest in the at least two search spaces corresponding to the at least two PDCCHs, that is, the index of the first search space is lower than an index of the second search space. Then, the terminal device determines, based on a control information resource on which the first search space is located, the TCI corresponding to the first downlink channel. Further, the TCI corresponding to the first downlink channel is a TCI corresponding to the control information resource on which the first search space is located.

For example, the terminal device determines the target TCI in a manner in which the index of the search space is predefined or a manner in which the index of the search space is configured by using higher layer signaling. Correspondingly, the first network device determines, based on the target TCI, the index of the search space, where the index is predefined, or configured by using the higher layer signaling. To be specific, an index number of the first search space in which the control information resource corresponding to the target TCI is located is predefined or configured. For example, the index of the first search space is 5. In this case, when sending the first PDCCH, the first network device sends the first PDCCH in the search space whose index is 5. The terminal device determines, in the at least two search spaces corresponding to the at least two PDCCHs, the first search space whose index is 5, and then determines, based on the control information resource on which the first search space is located, the TCI corresponding to the first downlink channel. Further, the TCI corresponding to the first downlink channel is a TCI corresponding to the control information resource on which the first search space is located. It should be understood that the foregoing manner of determining the target TCI by using the highest index or the lowest index may alternatively be predefined or configured by using higher layer signaling.

**Case 2: The first information includes types of search spaces in which the at least two PDCCHs are located.**

The terminal device determines, based on types of at least two search spaces on the at least two control information resources on which the PDCCHs are located, the TCI corresponding to the first downlink channel. The types of the at least two search spaces include a type of a first search space and a type of a second search space. Specifically, the types of the search spaces include a user-specific search space and a common search space.

For example, the terminal device determines the target TCI based on the user-specific search space. Correspondingly, the first network device determines the type of the search space based on the target TCI. To be specific, when sending the first PDCCH, the first network device sends the first PDCCH in the user-specific search space. In this way, the terminal device determines, based on the control information resource corresponding to the first search space in which the PDCCH is located, the TCI corresponding to the first downlink channel. The first search space is the user-specific search space.

For example, the terminal device determines the target TCI based on the common search space. Correspondingly, the first network device determines the type of the search space based on the target TCI. To be specific, when sending the first PDCCH, the first network device sends the first PDCCH in the common search space. In this way, the terminal device determines, based on the control information resource corresponding to the first search space in which the PDCCH is located, the TCI corresponding to the first downlink channel. The first search space is the common search space.

It should be understood that the foregoing manner of determining the target TCI by using the user-specific search space or the common search space may be predefined or configured by using higher layer signaling.

**Case 3: The first information includes monitoring periodicities corresponding to the at least two PDCCHs.**

The terminal device determines, based on monitoring periodicities corresponding to the at least two PDCCHs, the TCI corresponding to the first downlink channel. The monitoring periodicities corresponding to the at least two PDCCHs include a first PDCCH monitoring periodicity and a second PDCCH monitoring periodicity.

For example, the terminal device determines the target TCI based on a largest monitoring periodicity in PDCCH monitoring periodicities. Correspondingly, the first network device determines the PDCCH monitoring periodicity based on the target TCI. To be specific, when sending the first PDCCH, the first network device sends the first PDCCH on a PDCCH monitoring occasion with the largest configured PDCCH monitoring periodicity. In this way, the terminal device determines the first PDCCH with the largest monitoring periodicity in the at least two PDCCHs, that is, the first PDCCH monitoring periodicity is greater than the second PDCCH monitoring periodicity. Then, the terminal device determines, based on a control information resource corresponding to the first PDCCH monitoring periodicity, the TCI corresponding to the first downlink channel. Further, the TCI corresponding to the first downlink channel is a TCI corresponding to the control information resource corresponding to the first PDCCH monitoring periodicity.

For example, the terminal device determines the target TCI based on a smallest monitoring periodicity in PDCCH monitoring periodicities. Correspondingly, the first network device determines the PDCCH monitoring periodicity based on the target TCI. To be specific, when sending the first PDCCH, the first network device sends the first PDCCH on a PDCCH monitoring occasion with the smallest configured PDCCH monitoring periodicity. In this way, the terminal device determines the first PDCCH with the smallest monitoring periodicity in the at least two PDCCHs, that is, the first PDCCH monitoring periodicity is less than the second PDCCH monitoring periodicity. Then, the terminal device may determine, based on a control information resource corresponding to the first PDCCH monitoring periodicity, the TCI corresponding to the first downlink channel. Further, the TCI corresponding to the first downlink channel is a TCI corresponding to the control information resource corresponding to the first PDCCH monitoring periodicity.

For example, the terminal device determines the target TCI based on a predefined PDCCH monitoring periodicity or a PDCCH monitoring periodicity that is configured by using higher layer signaling. Correspondingly, the first network device determines, based on the target TCI, the PDCCH monitoring periodicity that is predefined or that is configured by using the higher layer signaling, that is, predefines or configures a PDCCH monitoring periodicity corresponding to the control information resource corresponding to the target TCI. For example, a PDCCH monitoring periodicity corresponding to the first PDCCH is that there is one PDCCH monitoring occasion every 10 symbols. In this case, the first network device sends the first PDCCH on the PDCCH monitoring occasion that occurs every 10 symbols in the configured PDCCH monitoring periodicity. The terminal device may determine, in the monitoring periodicities corresponding to the at least two PDCCHs, the first PDCCH on the monitoring occasion that occurs every 10 symbols in the monitoring periodicity, and then determine, based on the control information resource corresponding to the first PDCCH monitoring periodicity, the TCI corresponding to the first downlink channel. Further, the TCI corresponding to the first downlink channel is a TCI corresponding to the control information resource corresponding to the first PDCCH monitoring periodicity. It should be understood that the foregoing manner of determining the target TCI by using the largest PDCCH monitoring periodicity or the smallest PDCCH monitoring periodicity may alternatively be predefined or configured by using higher layer signaling.

**Case 4: The first information includes quantities of the control information resources corresponding to the at least two PDCCHs.**

The terminal device determines, based on quantities of the at least two control information resources corresponding to the PDCCHs, the TCI corresponding to the first downlink channel. The at least two control information resources include a first control information resource and a second control information resource.

For example, the terminal device determines the target TCI based on detected quantities of the control information resources corresponding to the PDCCHs. Correspondingly, the first network device determines, based on the target TCI, the quantities of the control information resources corresponding to the PDCCHs. To be specific, the first network device may send a plurality of first PDCCHs on N1 first control information resources corresponding to the first TCI, and the second network device may send one or more second PDCCHs on N2 second control information resources corresponding to the second TCI. For example, N1 is greater than N2, and both N1 and N2 are integers greater than or equal to 1. In this way, the terminal device may determine, based on the quantities of the control information resources corresponding to the at least two PDCCHs, the first TCI corresponding to the first control information resources with the larger quantity as the target TCI, to further determine the TCI corresponding to the first downlink channel. For another example, N1 is less than N2, and both N1 and N2 are integers greater than or equal to 1. In this way, the terminal device may determine, based on the quantities of the control information resources corresponding to the at least two PDCCHs, the first TCI corresponding to the first control information resources with the smaller quantity as the target TCI, and further determine the TCI corresponding to the first downlink channel. Further, the TCI corresponding to the first downlink channel is the first TCI.

**Case 5: The first information includes time domain positions of the control information resources corresponding to the at least two PDCCHs.**

The terminal device determines, based on time domain positions (namely, positions of time domain resources on which the control information resources are located) of the at least two control information resources on which the PDCCHs are located, the TCI corresponding to the first downlink channel. The at least two time domain resource positions include a position of a first time domain resource and a position of a second time domain resource.

For example, the terminal device determines the target TCI based on a relative position relationship between the time domain resources in the at least two control information resources. Correspondingly, the first network device determines the time domain resources in the at least two control information resources based on the target TCI. Specifically, the first network device and the second network device send the PDCCHs based on the relative position relationship between the time domain resources in the at least two control information resources. In this way, the terminal device determines the target TCI based on the relative position relationship between the time domain resources in the at least two control information resources. To be specific, the first network device uses, as the first control information resource, a control information resource corresponding to a time domain resource that satisfies a preset relative position relationship, and sends the first PDCCH on the first control information resource. Correspondingly, the terminal device may determine, based on a control information resource corresponding to the first time domain resource, the TCI corresponding to the first downlink channel. The preset relative position relationship includes at least one of the following relationships:
a start symbol of the first time domain resource is before a start symbol of the second time domain resource;
a start symbol of the first time domain resource is after a start symbol of the second time domain resource;
an end symbol of the first time domain resource is before an end symbol of the second time domain resource;
an end symbol of the first time domain resource is after an end symbol of the second time domain resource;
a quantity of symbols occupied by the first time domain resource is greater than a quantity of symbols occupied by the second time domain resource; or
a quantity of symbols occupied by the first time domain resource is less than a quantity of symbols occupied by the second time domain resource.

For example, the terminal device determines the target TCI in a manner in which the time domain resource position is predefined or a manner in which the time domain resource position is configured by using higher layer signaling. Correspondingly, the first network device determines, based on the target TCI, the time domain resource position that is predefined or that is configured by using the higher layer signaling. In other words, the position of the first time domain resource may be predefined or configured. For example, symbol indexes are 4 to 7. In this case, when sending the first PDCCH, the first network device determines a control information resource corresponding to the predefined or configured position of the first time domain resource as the first control information resource, and sends the first PDCCH on the first control information resource. Correspondingly, the terminal device may determine, based on the first control information resource corresponding to the first time domain resource, the TCI corresponding to the first downlink channel. Further, the TCI corresponding to the first downlink channel is a TCI corresponding to the first control information resource corresponding to the first time domain resource. It should be understood that the first time domain resource position that is predefined or that is configured by using the higher layer signaling includes one or more of a start symbol, an end symbol, or duration of the first time domain resource. This is not limited in this embodiment of this application.

**Case 6: The first information includes at least one of indexes of PDCCH candidates, indexes of CCEs, or indexes of REGs corresponding to the at least two PDCCHs.**

The terminal device determines, based on at least two pieces of first information corresponding to the at least two control information resources on which the at least two PDCCHs are located, the TCI corresponding to the first downlink channel. The at least two pieces of first information include first information #A (which corresponds to the first control information resource) and first information #B (which corresponds to the second control information resource). Specifically, the first information herein may include at least one of an index of a PDCCH candidate corresponding to the PDCCH, an index of a start CCE in which the PDCCH is located, an index of an end CCE in which the PDCCH is located, an index of a start REG in which the PDCCH is located, an index of an end REG in which the PDCCH is located, and a mapping manner from a CCE to a REG. The mapping manner from the CCE to the REG includes: interleave mapping, non-interleaving mapping, a REG bundle size, and the like.

For example, the terminal device determines the target TCI based on a relationship between indexes of the at least two pieces of first information. Correspondingly, the first network device determines an index of one piece of first information in the indexes of the at least two pieces of first information based on the target TCI. For example, a relationship between the first information #A and the first information #B is that an index of the first information #A is higher than an index of the first information #B, or an index of the first information #A is lower than an index of the first information #B. The first network device determines, as the first control information resource, a control information resource corresponding to the index of the first information #A, and sends the PDCCH on the first control information resource. In this way, the terminal device determines, based on the first control information resource corresponding to the first information #A, the TCI corresponding to the first downlink channel. Further, the TCI corresponding to the first downlink channel is a TCI corresponding to the first control information resource corresponding to the first information #A.

For example, the terminal device determines the target TCI in a manner in which the index of the first information is predefined or a manner in which the index of the first information is configured by using higher layer signaling. Correspondingly, the first network device determines, based on the target TCI, the index that is predefined or that is configured by using the higher layer signaling and that is of the first information. In other words, the index of the first information #A is predefined or configured. In this case, when sending the first PDCCH, the first network device determines, as the first control information resource, the control information resource corresponding to the predefined or configured index of the first information #A, and sends the first PDCCH on the first control information resource. Correspondingly, the terminal device determines, based on the first control information resource corresponding to the first information #A, the TCI corresponding to the first downlink channel. Further, the TCI corresponding to the first downlink channel is a TCI corresponding to the first control information resource corresponding to the first information #A. It should be understood that the foregoing manner of determining the target TCI by using the relationship between the indexes of the at least two pieces of first information may alternatively be predefined or configured by using higher layer signaling.

**Case 7: The first information includes at least one of RNTIs or DCI formats corresponding to the at least two PDCCHs.**

Optionally, the terminal device determines, based on at least two RNTIs corresponding to the at least two PDCCHs, the TCI corresponding to the first downlink channel. Correspondingly, the first network device determines, based on the target TCI, an RNTI corresponding to the PDCCH. The at least two RNTIs include a first RNTI and a second RNTI. For example, the target TCI may be determined in a manner in which the first RNTI is predefined or in a manner in which the first RNTI is configured by using higher layer signaling. In other words, the first RNTI may be predefined or configured. In this case, when sending the first PDCCH, the first network device scrambles, by using the predefined or configured first RNTI, first DCI carried on the first PDCCH, and then sends the first PDCCH. Correspondingly, the terminal device may determine, based on the first PDCCH corresponding to the first RNTI, the TCI corresponding to the first downlink channel. Further, the TCI corresponding to the first downlink channel is a TCI corresponding to the first PDCCH corresponding to the first RNTI. The first RNTI may be an MCS-C-RNTI or a TRP-RNTI, or may be another RNTI. This is not limited in this embodiment of this application.

Optionally, the terminal device determines, based on at least two DCI formats corresponding to the at least two PDCCHs, the TCI corresponding to the first downlink channel. Correspondingly, the first network device determines, based on the target TCI, a DCI format corresponding to the PDCCH. The DCI format corresponding to the PDCCH may be understood as a DCI format corresponding to DCI carried on the PDCCH. The at least two DCI formats include a first DCI format and a second DCI format. For example, the target TCI may be determined in a manner in which the first DCI format is predefined or in a manner in which the first DCI format is configured by using higher layer signaling. In other words, the first DCI format may be predefined or configured. In this case, when sending the first PDCCH, the first network device includes, in the first PDCCH, the first DCI that is in the predefined or configured first DCI format. Correspondingly, the terminal device may determine, based on the first PDCCH corresponding to the first DCI format, the TCI corresponding to the first downlink channel. Further, the TCI corresponding to the first downlink channel is a TCI corresponding to the first PDCCH corresponding to the first DCI format. The first format may be a predefined DCI format or a DCI format configured by using higher layer signaling.

**Case 8: The first information includes time differences between transmission times of the at least two PDCCHs and a transmission time of the first downlink channel.**

The terminal device determines, based on at least two time differences between transmission times of the at least two PDCCHs and a transmission time of the first downlink channel, the TCI corresponding to the first downlink channel. Correspondingly, the first network device determines a time difference between a transmission time of at least one PDCCH and the transmission time of the first downlink channel based on the target TCI. It should be understood that, in this embodiment of this application, to ensure correct downlink channel transmission, the time difference between the transmission time of the PDCCH and the transmission time of the first downlink channel needs to be greater than or equal to a scheduling threshold, which is referred to as the first threshold in this application. Therefore, the terminal device may determine, as the target TCI, a TCI used by a PDCCH corresponding to a time difference that is greater than or equal to the first threshold and that is in the at least two time differences.

The time difference between the transmission time of the PDCCH and the transmission time of the first downlink channel may be one of the following:
a time difference between a start symbol of a control information resource on which the PDCCH is located and a start symbol of the first downlink channel;
a time difference between an end symbol of a control information resource on which the PDCCH is located and a start symbol of the first downlink channel;
a time difference between an end symbol of a control information resource on which the PDCCH is located and an end symbol of the first downlink channel;
a time difference between a start symbol of a control information resource on which the PDCCH is located and an end symbol of the first downlink channel;
a time difference between a symbol with a highest symbol index in a time domain resource occupied by the PDCCH and a start symbol of the first downlink channel; or
a time difference between a symbol with a lowest symbol index in a time domain resource occupied by the PDCCH and a start symbol of the first downlink channel.

**Case 9: The first information includes PDCCH quantities corresponding to the at least two PDCCHs.**

The terminal device determines, based on PDCCH quantities corresponding to the at least two PDCCHs, the TCI corresponding to the first downlink channel. Correspondingly, the first network device determines, based on the target TCI, a PDCCH quantity corresponding to at least one PDCCH.

For example, the terminal device determines the target TCI based on detected PDCCH quantities. To be specific, the first network device sends the first PDCCH on a control information resource on which a quantity of detected PDCCHs is the largest or smallest. In this way, the terminal device may first determine the first control information resource with a largest or smallest quantity in the at least two control information resources corresponding to the at least two PDCCHs, and then determine, based on the first control information resource, the TCI corresponding to the first downlink channel. Further, the TCI corresponding to the first downlink channel is a TCI corresponding to the first control information resource. It should be understood that the foregoing manner of determining the target TCI by detecting whether the PDCCH quantity is the largest or the smallest may alternatively be predefined or be configured by using the higher layer signaling. The terminal device may alternatively determine the target TCI in a manner in which another quantity (or another quantity range) of control information resources is predefined or is configured by using higher layer signaling. This is not limited in this embodiment of this application.

Optionally, in another case, the first information may include indexes of the control information resources of the at least two PDCCHs. In this case, a TCI corresponding to a control information resource with a low index may be predefined as the target TCI, or a TCI corresponding to a control information resource with a high index may be predefined as the target TCI.

Optionally, in another case, the first information may include indexes of the at least two TCIs. In this case, a TCI with a low index may be predefined as the target TCI, or a TCI with a high index may be predefined as the target TCI.

It should be understood that, in a possible implementation of this application, the terminal device may alternatively perform comprehensive determining with reference to the plurality of foregoing cases, to ensure that a TCI is finally selected as the target TCI. The following describes in detail a method in which the plurality of cases are referred. The method may include the following steps:
Step 1: A terminal device determines a candidate TCI based on a case A.
Step 2: If the candidate TCI includes one TCI, the terminal device determines the candidate TCI as a target TCI. If the candidate TCI includes a plurality of TCIs, the terminal device does not consider the case corresponding to step 1, and may determine a new candidate TCI in the candidate TCIs based on another case B that is other than the case corresponding to step 1. If the new candidate TCI includes a plurality of TCIs, the terminal device performs step 1 again. This process continues until a unique target TCI is determined. It may be understood that each case is used only once to sift out the candidate TCI. After a case is used once, one or more of other cases that are not used for determining are used to determine the candidate TCI.

It should be understood that the case A is different from the case B, and both the case A and the case B may belong to the foregoing nine cases. However, this is not limited in this embodiment of this application.

For example, the terminal device may first determine the target TCI based on the case 8 (that is, the time differences between the transmission times of the at least two PDCCHs and the transmission time of the first downlink channel). If a unique target TCI cannot be determined, the terminal device may further determine the target TCI in remaining TCIs based on the case 5 (that is, the time domain positions of the control information resources corresponding to the at least two PDCCHs). If a unique target TCI cannot be determined, the terminal device may further determine the target TCI in remaining TCIs based on the case 6 (that is, the at least one of the indexes of the PDCCH candidates, the indexes of the CCEs, or the indexes of the REGs corresponding to the at least two PDCCHs), the case 3 (the monitoring periodicities corresponding to the at least two PDCCHs), or the case 1 (that is, the identifiers of the search spaces in which the at least two PDCCHs are located).

For example, the terminal device may alternatively first determine the target TCI based on the monitoring periodicity corresponding to the PDCCH, and if a unique target TCI cannot be determined, determine the target TCI in remaining TCIs based on the time difference between the transmission time of the PDCCH and the transmission time of the first downlink channel. In other words, when the first information includes at least two pieces of information, a determining sequence of the first information is not limited in this application.

In a possible implementation, the foregoing information used to determine the target TCI (for example, information included in the first information separately corresponds to the cases 1 to 9) may have priorities. In other words, the terminal device may first perform determining by using information with a relatively high priority in the first information. If a unique target TCI cannot be determined by using the information with the relatively high priority, the terminal device then performs determining by using information with a relatively low priority. It should be understood that the priority may be predefined, or be configured for the terminal device by the network device by using higher layer signaling.

In an optional embodiment, the method further includes: The first network device sends higher layer signaling, where the higher layer signaling is used to indicate the target TCI; and the terminal device receives the higher layer signaling.

Specifically, the target TCI corresponding to the first downlink channel is indicated to the terminal device in an explicit manner. The first network device sends the higher layer signaling to the terminal device to indicate the target TCI. However, it should be understood that the target TCI is still one of the at least two TCIs. Because the target TCI (namely, a first TCI) corresponds to a first control information resource, this is equivalent to semi-statically configuring the first control information resource corresponding to the first downlink channel for the terminal device, that is, semi-statically configuring the first network device send the first downlink channel to the terminal device. In this embodiment, the higher layer signaling is sent by the first network device to the terminal device. However, it should be understood that, in specific implementation, the higher layer signaling may alternatively be sent by another network device or another node to the terminal device. This is not limited in this embodiment of this application.

It should be understood that the higher layer signaling may be signaling sent by a higher layer protocol layer, and the higher layer protocol layer is at least one of all protocol layers above a physical layer. The higher layer protocol layer may be specifically at least one of the following protocol layers: a medium access control (medium access control, MAC) layer, a radio link control (radio link control, RLC) layer, a packet data convergence protocol (packet data convergence protocol, PDCP) layer, a radio resource control (radio resource control, RRC) layer, a non-access stratum (non access stratum, NAS), and the like. Physical layer signaling or dynamic signaling is generally control information carried in DCI.

The higher layer signaling may be configured for a serving cell, may be configured for a HARQ process ID, may be configured for a codeword, or may be configured for the DCI. This is not limited in this embodiment of this application.

For example, the higher layer signaling may be configured for the serving cell. In other words, different higher layer signaling may be used to determine the target TCI in different serving cells. It may be understood that the target TCI may be determined in a first serving cell in a manner in which the higher layer signaling is used for configuration, and the target TCI may be determined in a second serving cell not in a manner in which the higher layer signaling is used for configuration, or the higher layer signaling used to determine the TCI is not configured in a second serving cell, or the target TCI may be determined in a second serving cell in a predefined manner. An advantage of this implementation is that the network device may also flexibly determine a serving cell in which multi-TRP PDCCH repeated transmission is performed, and a serving cell in which the multi-TRP PDCCH repeated transmission is not performed. The network device may configure, by using the higher layer signaling, the target TCI in the serving cell in which the multi-TRP PDCCH repeated transmission is performed. Similarly, the higher layer signaling herein may alternatively be for a bandwidth part, and an implementation is similar to that of the serving cell. Details are not described herein again.

For example, the higher layer signaling may be configured for the HARQ process ID. In other words, different higher layer signaling may be used for different HARQ process IDs to determine the target TCI. The HARQ process ID is generally notified in DCI or determined according to a predefined rule. For example, the target TCI may be determined by a transport block in a first HARQ process ID in a manner in which the higher layer signaling is used for configuration, and the target TCI may be determined by a transport block in a second HARQ process ID not in a manner in which the higher layer signaling is used for configuration, or the higher layer signaling used to determine the target TCI is not configured in a transport block in a second HARQ process ID, or the target TCI may be determined by a transport block in a second HARQ process ID in a predefined manner. An advantage of this implementation is that the network device may flexibly determine a HARQ process ID in which multi-TRP PDCCH repeated transmission is performed, and a HARQ process ID in which the multi-TRP PDCCH repeated transmission is not performed. In this way, terminal devices in a same serving cell or bandwidth part may dynamically switch between different transmission manners.

For example, the higher layer signaling may be configured for the codeword. In other words, different higher layer signaling may be used for different codewords to determine the target TCI, or different higher layer signaling may be used for different codeword quantities to determine the target TCI. Optionally, the codeword is generally 0 or 1, and the codeword quantity is generally 1 or 2. For example, the target TCI may be determined on a first codeword in a manner in which the higher layer signaling is used for configuration, and the target TCI may be determined on a second codeword not in a manner in which the higher layer signaling is used for configuration, or the higher layer signaling used to determine the target TCI is not configured on a second codeword, or the target TCI may be determined on a second codeword in a predefined manner. An advantage of this implementation is that the network device may flexibly determine a codeword on which multi-TRP PDCCH repeated transmission is performed or a codeword quantity for which multi-TRP PDCCH repeated transmission is performed, and a codeword on which the multi-TRP PDCCH repeated transmission is not performed or a codeword quantity for which the multi-TRP PDCCH repeated transmission is not performed. In this way, terminal devices in a same serving cell or bandwidth part may dynamically switch between different transmission manners. It should be understood that the codeword or the codeword quantity may be configured by using higher layer signaling, or may be dynamically notified in DCI.

For example, the higher layer signaling may alternatively be configured for DCI. In other words, different higher layer signaling may be used for different DCI to determine the target TCI. The different DCI herein may be different DCI formats, for example, a DCI format 1_0 or a DCI format 1_1, or may be DCI scrambled by using different RNTIs, or may be DCI of different search spaces. This is not limited herein. For example, the target TCI may be determined, on a first downlink channel scheduled by using first DCI, in a manner in which the higher layer signaling is used for configuration, and the target TCI may be determined, on a second downlink channel scheduled by using second DCI, not in a manner in which the higher layer signaling is used for configuration, or the higher layer signaling used to determine the target TCI is not configured on a second downlink channel scheduled by using second DCI, or the target TCI may be determined, in a predefined manner, on a second downlink channel scheduled by using second DCI. An advantage of this implementation is that the network device may flexibly determine, by using the DCI, a time at which the terminal device performs multi-TRP PDCCH repeated transmission or a time at which the terminal device does not perform multi-TRP PDCCH repeated transmission. In this way, terminal devices in a same serving cell or bandwidth part may dynamically switch between transmission manners of different services.

In an optional embodiment, the DCI includes first indication information, where the first indication information is used to indicate one of the at least two TCIs. That the terminal device determines a target TCI in the at least two TCIs includes: The terminal device determines the target TCI based on the first indication information.

Specifically, the first indication information may be a first bit field in the DCI. The terminal device may determine, based on a bit status of the first bit field in the DCI, the TCI corresponding to the first downlink channel. The bit status of the first bit field may include a first bit status and a second bit status. The first bit status is used to indicate the first TCI corresponding to the first control information resource in the at least two control information resources. The second bit status is used to indicate the second TCI corresponding to the second control information resource in the at least two control information resources. It should be understood that the first indication information may directly indicate one of the at least two TCIs, or may indicate one of the at least two control information resources. The terminal device then determines, based on the indicated control information resource, a TCI corresponding to the control information resource. This is not limited in this embodiment of this application.

For example, the network device may introduce a one-bit indication field into the DCI, or the indication field is one bit, to indicate the target TCI. For example, 0 is used to indicate that the target TCI is the first TCI corresponding to the first control information resource, and 1 is used to indicate that the target TCI is a second TCI corresponding to a second control information resource. Alternatively, 1 is used to indicate that the target TCI is the first TCI corresponding to the first control information resource, and 0 is used to indicate that the target TCI is a second TCI corresponding to a second control information resource. For example, 0 is used to indicate that the target TCI is the first control information resource, and 1 is used to indicate that the target TCI is the second control information resource. Alternatively, 1 is used to indicate that the target TCI is the first control information resource, and 0 is used to indicate that the target TCI is the second control information resource. After receiving the DCI, the terminal device directly determines, based on the one-bit indication field in the DCI, the target TCI corresponding to the first downlink channel.

In an optional embodiment, a time difference between a transmission time of a PDCCH corresponding to the target TCI and the transmission time of the first downlink channel is greater than or equal to a first threshold.

It should be understood that, in this embodiment of this application, to ensure correct downlink channel transmission, the time difference between the transmission time of the PDCCH and the transmission time of the first downlink channel needs to be greater than or equal to a scheduling threshold, which is referred to as the first threshold in this application. Therefore, the time difference between the transmission time of the PDCCH corresponding to the target TCI selected by the terminal device and the transmission time of the first downlink channel needs to be greater than or equal to the first threshold. The first threshold may be predefined, or may be configured by the network device for the terminal device by using signaling, or may be reported by the terminal device. This is not limited in this embodiment of this application.

In an optional embodiment, the terminal device first determines the target TCI, and then determines whether the time difference between the transmission time of the PDCCH corresponding to the target TCI and the transmission time of the first downlink channel is greater than or equal to the first threshold. If the time difference is greater than or equal to the first threshold, the terminal device may directly use the target TCI as the TCI corresponding to the first downlink channel. If the time difference is less than the first threshold, the terminal device may re-determine a target TCI with a time difference that satisfies the condition. For example, when the time difference satisfies the condition that the time difference is greater than or equal to the first threshold, the terminal device may determine, as the TCI corresponding to the first downlink channel, a TCI corresponding to a PDCCH that is last transmitted in the at least two PDCCHs or a TCI corresponding to a PDCCH that is first transmitted in the at least two PDCCHs.

In another possible embodiment, the terminal device determines the target TCI in TCIs corresponding to a plurality of PDCCHs, where time differences between transmission times of the PDCCHs and the transmission time of the first downlink channel are greater than or equal to a second threshold.

Specifically, a time difference between a transmission time of a PDCCH that is last transmitted in the at least two PDCCHs and the transmission time of the first downlink channel is greater than or equal to the second threshold; or
a time difference between a transmission time of a PDCCH that is first transmitted in the at least two PDCCHs and the transmission time of the first downlink channel is greater than or equal to the second threshold.

For example, the time difference between the transmission time of the PDCCH that is last transmitted in the at least two PDCCHs and the transmission time of the first downlink channel is greater than or equal to the second threshold. It should be understood that if the time difference corresponding to the PDCCH that is last transmitted does not satisfy the foregoing condition (that is, the time difference is less than the second threshold), the terminal device may select, as the target TCI, a TCI corresponding to a PDCCH that satisfies the condition most recently.

For example, the time difference between the transmission time of the PDCCH that is first transmitted in the at least two PDCCHs and the transmission time of the first downlink channel is greater than or equal to the second threshold. It should be understood that if the time difference corresponding to the PDCCH that is first transmitted satisfies the foregoing condition (that is, the time difference is greater than or equal to the second threshold), the terminal device may select, as the target TCI, a TCI corresponding to a PDCCH that satisfies the condition in at least one of the cases 1 to 9. It should be understood that if the time difference corresponding to the PDCCH that is first transmitted does not satisfy the foregoing condition (that is, the time difference is less than the second threshold), the terminal device may determine the target TCI not by using the method in this embodiment. In other words, the terminal device may determine the TCI corresponding to the first downlink channel, not by using the method in this embodiment. Optionally, in this case, the terminal device may assume a predefined TCI or assume that there is no TCI indication.

The second threshold may be equal to the first threshold. The second threshold may be predefined, or may be configured by the network device for the terminal device by using signaling, or may be reported by the terminal device. This is not limited in this embodiment of this application.

The first transmission may be understood as an earliest transmission in time domain, for example, transmission with an earliest start symbol, and/or with an earliest end symbol, and/or with a lowest slot index. A PDCCH transmitted on a control information resource corresponding to the earliest transmission is the PDCCH that is first transmitted. If start symbols and/or end symbols and/or slot indexes of the at least two control information resources are the same, the first transmission may be understood as transmission performed by using a smallest frequency domain resource, for example, a REG index or a CCE index. A PDCCH corresponding to a control information resource corresponding to the transmission performed by using the smallest frequency domain resource is the PDCCH that is first transmitted. Similarly, the last transmission may be understood as a latest transmission in time domain, for example, transmission with a latest start symbol, and/or with a latest end symbol, and/or with a highest slot index. A PDCCH corresponding to a control information resource corresponding to the latest transmission is the PDCCH that is last transmitted. If start symbols and/or end symbols and/or indexes of the at least two control information resources are the same, the last transmission may be understood as transmission performed by using a largest frequency domain resource, for example, a REG index or a CCE index. A PDCCH corresponding to a control information resource corresponding to the transmission performed by using the largest frequency domain resource is the PDCCH that is last transmitted.

In a possible implementation, the terminal device determines time domain resources of the at least two control information resources corresponding to the at least two PDCCHs. The terminal device determines, based on the at least two time domain resources, whether the time differences between the transmission times of the at least two PDCCHs and the transmission time of the first downlink channel are greater than or equal to the first threshold. Further, if a first time domain resource is one of the at least two time domain resources, and a time difference between the first time domain resource and the first downlink channel is greater than or equal to the first threshold, the terminal device determines that the time differences between the transmission times of the at least two PDCCHs and the transmission time of the first downlink channel are greater than or equal to the first threshold. Conversely, if a time difference between the first time domain resource and the first downlink channel is less than the first threshold, the terminal device determines that the time differences between the transmission times of the at least two PDCCHs and the transmission time of the first downlink channel are less than the first threshold.

The first time domain resource is a last time domain resource of the at least two time domain resources, or the first time domain resource is a 1^{st} time domain resource of the at least two time domain resources, or the first time domain resource is a time domain resource corresponding to the control information resource corresponding to the target TCI, or the first time domain resource is a predefined time domain resource or a time domain resource that is configured by using higher layer signaling.

Optionally, the time difference between the first time domain resource and the first downlink channel may be understood as:
a time difference between a start symbol of the first time domain resource and a start symbol of the first downlink channel; or
a time difference between an end symbol of the first time domain resource and an end symbol of the first downlink channel; or
a time difference between an end symbol of the first time domain resource and a start symbol of the first downlink channel.

In an optional embodiment, the method further includes: The terminal device sends capability information, where the capability information is used to indicate that the terminal device is capable of receiving at least two PDCCHs; and/or
the terminal device receives first configuration information, where the first configuration information is used to configure the terminal device to receive at least two PDCCHs.

Specifically, the terminal device may report the capability information of the terminal device to the network device (for example, the first network device and/or the second network device), to indicate that the terminal device supports a capability of receiving at least two PDCCHs. The network device may send the first configuration information to the terminal device, to configure the terminal device to receive at least two PDCCHs. It should be understood that the network device may send the first configuration information to the terminal device based on the capability information reported by the terminal device, or may send the first configuration information to the terminal device not based on the capability information reported by the terminal device (or when the terminal device does not report the capability information). It should be understood that a repetition quantity of the at least two PDCCHs may be configured by using the higher layer signaling, or may be predefined. In this embodiment, the terminal device reports the capability information to the network device, so that the network device can flexibly configure, based on a requirement, whether to repeatedly transmit the PDCCHs, thereby flexibly adapting to a plurality of different scenarios.

If the capability information reported by the terminal device indicates that the terminal device does not support the capability of receiving at least two PDCCHs, in this case, it may be understood that the terminal device cannot determine, by using the method in this embodiment of this application, the TCI corresponding to the first downlink channel. If the capability information reported by the terminal device indicates that the terminal device supports the capability of receiving at least two PDCCHs, however, the network device may send third configuration information to the terminal device, where the third configuration information is used to configure the terminal device not to receive at least two PDCCHs. In this case, it may be understood that the terminal device cannot determine, by using the method in this embodiment of this application, the TCI corresponding to the first downlink channel.

For example, because the at least two PDCCHs carry the same DCI, the at least two PDCCHs may correspond to a same DCI format, and/or there is a correspondence between second information corresponding to the at least two PDCCHs, where the correspondence may be predefined, or configured by using higher layer signaling. The second information includes at least one of the following: an index of a PDCCH candidate, an index of a start CCE, or an index of a start REG. It may be understood that there is an association relationship between the second information corresponding to the at least two PDCCHs, where the association relationship is predefined, or configured by using higher layer signaling. In this way, the terminal device may perform joint detection on the PDCCHs, thereby reducing a quantity of times of blind detection performed by the terminal device.

In an optional embodiment, that the terminal device determines a target TCI in the at least two TCIs includes: The terminal device determines the target TCI in the at least two TCIs when at least one of the following conditions is satisfied:
an RNTI used to scramble the at least two PDCCHs is a first RNTI;
a search space corresponding to the at least two PDCCHs is a first search space;
a format of the DCI is a first format;
the at least two control information resources belong to a first control information resource group; or
a bit status of a priority bit field of the DCI is a first bit status.

Specifically, the terminal device may determine, by using the method in this embodiment of this application, the TCI corresponding to the first downlink channel, only when at least one of the foregoing conditions is satisfied. The first RNTI, the first search space, the first format, the first control information resource group, or the first bit status may be predefined, or may be configured by the network device for the terminal device by using the higher layer signaling.

Optionally, the first bit status is used to indicate an integer value greater than 0, for example, 1, 2, 3, 4, 5, 6, 7, or 8. It may be understood that, when an integer value indicated by the bit status of the priority bit field of the DCI is a value greater than 0 (that is, when the bit status of the priority bit field of the DCI is the first bit status), information that is indicated, by the DCI, to be transmitted is high-priority important data information. In this case, the terminal device needs to determine the target TCI in the at least two TCIs.

In an optional embodiment, the method further includes: The terminal device receives second configuration information, where the second configuration information is used to configure at least one of the first RNTI, the first search space, the first format, the first control information resource group, or the first bit status.

For example, when all RNTIs that are used to scramble the at least two PDCCHs are the first RNTI, the terminal device may determine, based on the method in this embodiment of this application, the TCI corresponding to the first downlink channel. For example, the first RNTI is an MCS-C-RNTI.

For example, when search space groups corresponding to the at least two PDCCHs are the first search space group, the terminal device may determine, based on the method in this embodiment of this application, the TCI corresponding to the first downlink channel. Alternatively, when a search space corresponding to the at least two PDCCHs is the first search space, the terminal device may determine, based on the method in this embodiment of this application, the TCI corresponding to the first downlink channel. For example, the first search space is a common search space or a user-specific search space.

For example, when the format of the DCI is the first DCI format, the terminal device may determine, based on the method in this embodiment of this application, the TCI corresponding to the first downlink channel. For example, the first DCI format is a DCI format 1 0, a DCI format 1_1, or a DCI format 1_2.

For example, when the at least two control information resources belong to the first control information resource group, the terminal device may determine, based on the method in this embodiment of this application, the TCI corresponding to the first downlink channel.

For example, when the bit status of the priority bit field of the DCI is the first bit status, the terminal device may determine, based on the method in this embodiment of this application, the TCI corresponding to the first downlink channel.

For example, when all RNTIs that are used to scramble the at least two PDCCHs are the first RNTI, and search space groups corresponding to the at least two PDCCHs are the first search space group, the terminal device may determine, based on the method in this embodiment of this application, the TCI corresponding to the first downlink channel. For example, when all RNTIs that are used to scramble the at least two PDCCHs are the first RNTI, and the format of the DCI is the first DCI format, the terminal device may determine, based on the method in this embodiment of this application, the TCI corresponding to the first downlink channel. For example, when the at least two control information resources belong to the first control information resource group, the format of the DCI is the first DCI format, and search space groups corresponding to the at least two PDCCHs are the first search space group, the terminal device may determine, based on the method in this embodiment of this application, the TCI corresponding to the first downlink channel. It should be understood that cases based on which the terminal device performs determining may be predefined, or may be configured by the network device for the terminal device by using higher layer signaling.

Optionally, the terminal device may alternatively determine, based on the time-frequency resource that is indicated by the DCI and that is of the first downlink channel, whether to use the method in this embodiment of this application to determine the TCI corresponding to the first downlink channel.

Specifically, the target TCI may be determined in the at least two TCIs by using the method in this embodiment of this application when the time-frequency resource of the first downlink channel satisfies at least one of the following conditions:
a resource index of the first downlink channel belongs to a first index set;
a length of a time domain resource of the first downlink channel belongs to a first time domain length; or
a transmission time offset of the transmission time of the first downlink channel belongs to a first offset set.

For example, the first index set is {0, 1, 2, ..., 15}. When the resource index of the first downlink channel belongs to {0, 1, 2, ..., 15}, the terminal device may determine, based on the method in this embodiment of this application, the TCI corresponding to the first downlink channel. In this way, different resource sets may be flexibly configured for different service types, so that the terminal device can use the method in this embodiment of this application only for a specific service type.

For example, the first time domain length includes one or more of {2, 4, 7}. When the length of the time domain resource of the first downlink channel belongs to the one or more of {2, 4, 7}, the terminal device may determine, based on the method in this embodiment of this application, the TCI corresponding to the first downlink channel.

For example, the first offset set is {0, 1, 2, 3, 4}. When the transmission time offset of the first downlink channel belongs to {0, 1, 2, 3, 4}, the terminal device may determine, based on the method in this embodiment of this application, the TCI corresponding to the first downlink channel.

In an optional embodiment, the terminal device may determine, by using the method in this embodiment of this application, the TCI corresponding to the first downlink channel, only when the following condition is satisfied: the terminal device determines that the TCIs corresponding to the at least two control information resources are different, or index numbers of the at least two control information resources are different, or the time domain resources of the at least two control information resources are different, or the PDCCH is configured or indicated to be repeatedly transmitted.

Optionally, the network device may further send fourth configuration information to the terminal device. The fourth configuration information is used to configure a quantity of times of PDCCH repeated transmission. Specifically, the quantity of times of the transmission of the PDCCH is greater than or equal to 2. It should be understood that the PDCCH repeated transmission may be at least one of repeated transmission in time domain, repeated transmission in frequency domain, or repeated transmission in code domain.

Optionally, the network device may further send fifth configuration information to the terminal device. The fifth configuration information is used to configure the PDCCH repeated transmission to be repeated transmission between different TRPs.

It should further be understood that sequence numbers of the foregoing processes do not indicate an execution sequence. The execution sequence of the processes should be determined based on functions and internal logic of the processes, and should not be construed as any limitation on an implementation process of this embodiment of this application.

In the foregoing embodiments provided in this application, the methods provided in the embodiments of this application are described from perspectives of the terminal device, the network device, and interaction between the network device and the terminal device. It may be understood that, to implement the functions in the methods provided in the embodiments of this application, the network elements such as the terminal device and the network device include corresponding hardware structures and/or software modules for performing the functions. A person skilled in the art should easily be aware that, in combination with the examples described in the embodiments disclosed in this specification, algorithm steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, the terminal device and the network device may be divided into function modules based on the foregoing method examples. For example, each function module may be obtained through division based on each function, or two or more functions may be integrated into one processing module. The integrated module may be implemented in a form of hardware, or may be implemented in a form of a software functional module. It should be noted that, in the embodiments of this application, module division is an example, and is merely logical function division. In actual implementation, another division manner may be used.

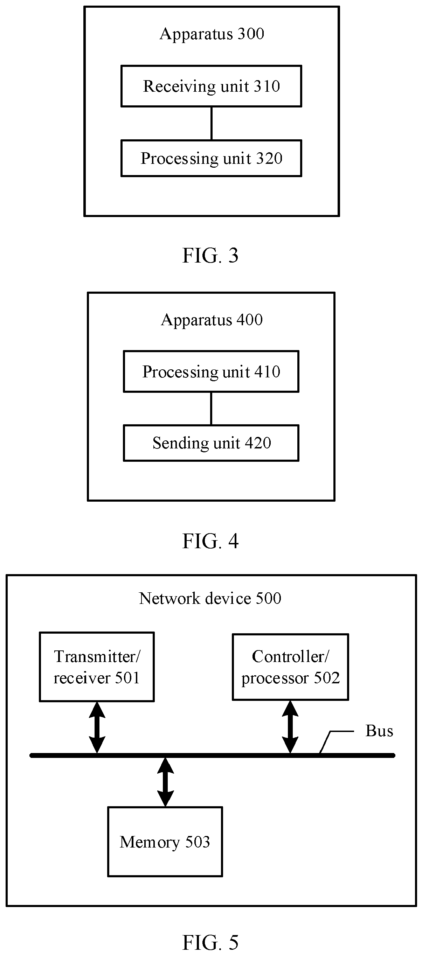

The foregoing describes in detail the downlink channel transmission method based on the embodiments of this application with reference to FIG. 1 and FIG. 2. The following describes in detail downlink channel transmission apparatuses based on embodiments of this application with reference to FIG. 3 to FIG. 6.

When function modules are divided based on corresponding functions, FIG. 3 shows a downlink channel transmission apparatus 300 according to an embodiment of this application. The downlink channel transmission apparatus is a terminal device or a downlink channel transmission apparatus that supports a terminal device in implementing the method provided in the embodiments. For example, the downlink channel transmission apparatus may be a chip system. The apparatus 300 includes a receiving unit 310 and a processing unit 320.

In a possible implementation, the apparatus 300 is configured to perform the processes and steps corresponding to the terminal device in the method 200.

The receiving unit 310 is configured to receive at least two physical downlink control channels PDCCHs on at least two control information resources, where the at least two PDCCHs carry same downlink control information DCI, and the DCI is used to indicate a time-frequency resource corresponding to a first downlink channel. The processing unit 320 is configured to obtain at least two transmission configuration indicators TCIs corresponding to the at least two control information resources, and determine a target TCI in the at least two TCIs, where the target TCI is a TCI corresponding to the first downlink channel. The receiving unit 310 is configured to receive the first downlink channel based on the DCI and the target TCI that is determined by the processing unit 320.

For example, the processing unit 320 is specifically configured to determine the target TCI in the at least two TCIs based on at least one of the following information: identifiers of search spaces in which the at least two PDCCHs are located; types of search spaces in which the at least two PDCCHs are located; monitoring periodicities corresponding to the at least two PDCCHs; quantities of the control information resources corresponding to the at least two PDCCHs; time domain positions of the control information resources corresponding to the at least two PDCCHs; indexes of PDCCH candidates corresponding to the at least two PDCCHs; indexes of control resource elements CCEs corresponding to the at least two PDCCHs; indexes of resource element groups REGs corresponding to the at least two PDCCHs; radio network temporary identifiers RNTIs corresponding to the at least two PDCCHs; time differences between transmission times of the at least two PDCCHs and a transmission time of the first downlink channel; indexes of the control information resources of the at least two PDCCHs; or indexes of the at least two TCIs.

For example, the receiving unit 310 is further configured to receive higher layer signaling, where the higher layer signaling is used to indicate the target TCI.

For example, the DCI does not carry indication information used to indicate the TCI corresponding to the first downlink channel.

For example, a time difference between a transmission time of a PDCCH corresponding to the target TCI and the transmission time of the first downlink channel is greater than or equal to a first threshold.

For example, a time difference between a transmission time of a PDCCH that is last transmitted in the at least two PDCCHs and the transmission time of the first downlink channel is greater than or equal to a second threshold, or a time difference between a transmission time of a PDCCH that is first transmitted in the at least two PDCCHs and the transmission time of the first downlink channel is greater than or equal to the second threshold.

For example, the apparatus further includes a sending unit, configured to send capability information, where the capability information is used to indicate that the apparatus is capable of receiving at least two PDCCHs; and/or the receiving unit 310 is further configured to receive first configuration information, where the first configuration information is used to configure the apparatus to receive at least two PDCCHs.

For example, the processing unit 320 is specifically configured to determine the target TCI in the at least two TCIs when at least one of the following conditions is satisfied: an RNTI used to scramble the at least two PDCCHs is a first RNTI; a search space corresponding to the at least two PDCCHs is a first search space; a format of the DCI is a first DCI format; the at least two control information resources belong to a first control information resource group; or a bit status of a priority bit field of the DCI is a first bit status.

It should be understood that, in the apparatus 300, an entity device corresponding to the receiving unit is a receiver, an entity device corresponding to the processing unit is a processor, and an entity device corresponding to the sending unit is a transmitter.

It should be understood that, the apparatus 300 herein is presented in a form of function units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that, the apparatus 300 may be specifically the terminal device in the foregoing embodiments; and the apparatus 300 may be configured to perform the processes and/or steps corresponding to the terminal device in the foregoing method embodiments. To avoid repetition, details are not described herein.

When function modules are divided based on corresponding functions, FIG. 4 shows a possible composition example of the downlink channel transmission apparatus in the foregoing embodiments. The downlink channel transmission apparatus may perform the steps performed by the network device in any one of the method embodiments of this application. As shown in FIG. 4, the downlink channel transmission apparatus is a network device or a downlink channel transmission apparatus that supports a network device in implementing the method provided in the embodiments. For example, the downlink channel transmission apparatus may be a chip system. The apparatus 400 includes a processing unit 410 and a sending unit 420.

In a possible implementation, the processing unit 410 is configured to determine a TCI corresponding to a physical downlink control channel PDCCH as a target TCI corresponding to a first downlink channel, and determine, based on a correspondence between the target TCI and first information, the first information corresponding to the PDCCH. The sending unit 420 is configured to send the PDCCH on a control information resource based on the first information and the target TCI that is determined by the processing unit 410, where the PDCCH carries downlink control information DCI, and send the first downlink channel based on the DCI and the target TCI.

For example, the first information is at least one of the following information: an identifier of a search space in which the PDCCH is located; a type of a search space in which the PDCCH is located; a monitoring periodicity corresponding to the PDCCH; a quantity of control information resources corresponding to the PDCCH; a time domain position of a control information resource corresponding to the PDCCH; an index of a PDCCH candidate corresponding to the PDCCH; an index of a control resource element CCE corresponding to the PDCCH; an index of a resource element group REG corresponding to the PDCCH; a radio network temporary identifier RNTI corresponding to the PDCCH; a time difference between a transmission time of the PDCCH and a transmission time of the first downlink channel; an index of the control information resource of the PDCCH; or an index of the TCI.

For example, the DCI does not carry indication information used to indicate the TCI corresponding to the first downlink channel.

For example, the time difference between the transmission time of the PDCCH and the transmission time of the first downlink channel is greater than or equal to a first threshold.

For example, the apparatus further includes: a receiving unit, configured to receive capability information, where the capability information is used to indicate that a terminal device is capable of receiving at least two PDCCHs; and/or the sending unit 420 is further configured to send first configuration information, where the first configuration information is used to configure the terminal device to receive at least two PDCCHs.

For example, the processing unit 410 is specifically configured to determine the TCI corresponding to the PDCCH as the target TCI when at least one of the following conditions is satisfied: an RNTI used to scramble the PDCCH is a first RNTI; a search space corresponding to the PDCCH is a first search space; a format of the DCI is a first DCI format; the control information resource belongs to a first control information resource group; or a bit status of a priority bit field of the DCI is a first bit status.

In another possible implementation, the processing unit 410 is configured to determine a TCI corresponding to a physical downlink control channel PDCCH as a target TCI corresponding to a first downlink channel. The sending unit 420 is configured to send higher layer signaling, where the higher layer signaling is used to indicate the target TCI determined by the processing unit 410; and send the PDCCH on a control information resource based on the target TCI, where the PDCCH carries downlink control information DCI. The sending unit 420 is further configured to send the first downlink channel based on the DCI and the target TCI.

For example, the DCI does not carry indication information used to indicate the TCI corresponding to the first downlink channel.

For example, a time difference between a transmission time of the PDCCH and a transmission time of the first downlink channel is greater than or equal to a first threshold.

For example, the apparatus further includes: a receiving unit, configured to receive capability information, where the capability information is used to indicate that a terminal device is capable of receiving at least two PDCCHs; and/or the sending unit 420 is further configured to send first configuration information, where the first configuration information is used to configure the terminal device to receive at least two PDCCHs.

For example, the processing unit 410 is specifically configured to determine the TCI corresponding to the PDCCH as the target TCI when at least one of the following conditions is satisfied: an RNTI used to scramble the PDCCH is a first RNTI; a search space corresponding to the PDCCH is a first search space; a format of the DCI is a first DCI format; the control information resource belongs to a first control information resource group; or a bit status of a priority bit field of the DCI is a first bit status.

It should be understood that, in the apparatus 400, an entity device corresponding to the processing unit is a processor, and an entity device corresponding to the sending unit is a transmitter.

It should be understood that, the apparatus 400 herein is presented in a form of function units. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that the apparatus 400 may be specifically the first network device in the foregoing embodiments, and the apparatus 400 may be configured to perform the processes and/or steps corresponding to the first network device in the foregoing method embodiments. To avoid repetition, details are not described herein again.

The apparatus 300 and the apparatus 400 in the foregoing solutions respectively have a function of implementing the corresponding steps performed by the terminal device and a function of implementing the corresponding steps performed by the first network device in the foregoing methods. The functions may be implemented by hardware, or may be implemented by hardware by executing corresponding software. The hardware or the software includes one or more modules corresponding to the foregoing function. For example, the sending unit may be replaced with a transmitter, the receiving unit may be replaced with a receiver, and another unit such as a determining unit may be replaced with a processor, to respectively perform a sending operation, a receiving operation, and a related processing operation in the method embodiments. In other words, the receiving unit may be a receiver, the sending unit may be a transmitter, and the processing unit may be a processor.

In the embodiments of this application, the apparatuses in FIG. 3 and FIG. 4 may alternatively be a chip or a chip system, for example, a system on a chip (system on chip, SoC). Correspondingly, the receiving unit and the sending unit may be a transceiver circuit of the chip. This is not limited herein.

FIG. 5 is a possible schematic structural diagram of the network device in the foregoing embodiments. A network device 500 shown in FIG. 5 includes a transmitter/receiver 501, a controller/processor 502, and a memory 503.

The transmitter/receiver 501 is configured to support information receiving and sending between the network device and the terminal device in the foregoing embodiments. The controller/processor 502 performs various functions for communicating with the terminal device. On an uplink, an uplink signal from the terminal device is received by using an antenna, demodulated by the receiver 501, and further processed by the controller/processor 502 to restore service data and signaling information that are sent by the terminal device. On a downlink, service data and a signaling message are processed by the controller/processor 502 and demodulated by the transmitter 501 to generate a downlink signal, and the downlink signal is transmitted to the terminal device by using an antenna. The controller/processor 502 is further configured to perform a processing process that relates to the network device in the embodiment 200 and/or another process of the technologies described in this application. The memory 503 is configured to store program code and data of the network device.

For example, the controller/processor 502 is configured to determine a TCI corresponding to a physical downlink control channel PDCCH as a target TCI corresponding to a first downlink channel, and determine, based on a correspondence between the target TCI and first information, the first information corresponding to the PDCCH. The transmitter/receiver 501 is configured to send the PDCCH on a control information resource based on the first information and the target TCI that is determined by the processing unit, where the PDCCH carries downlink control information DCI.

For example, the controller/processor 502 is configured to determine a TCI corresponding to a physical downlink control channel PDCCH as a target TCI corresponding to a first downlink channel, send higher layer signaling by using the transceiver 520, where the higher layer signaling is used to indicate the target TCI determined by the processing unit; and send the PDCCH on a control information resource based on the target TCI, where the PDCCH carries downlink control information DCI.

It should be understood that the network device 500 may be specifically the first network device in the foregoing embodiments, and may be configured to perform the steps and/or processes corresponding to the first network device in the foregoing method embodiments. Optionally, the memory 503 may include a read-only memory and a random access memory, and provide instructions and data to the controller/processor 502. A part of the memory 503 may further include a non-volatile random access memory. For example, the memory may further store information about a device type. The controller/processor 502 may be configured to execute the instructions stored in the memory, and when the controller/processor 502 executes the instructions stored in the memory, the controller/processor 502 is configured to perform the steps and/or processes of the method embodiments corresponding to the first network device.

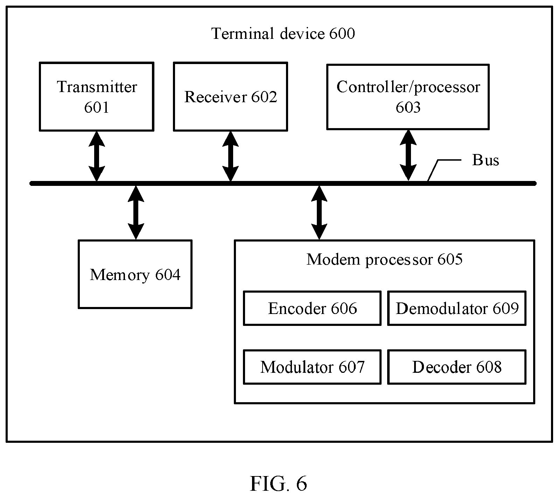

FIG. 6 is a simplified schematic diagram of a possible design structure of the terminal device in the foregoing embodiments. A terminal device 600 shown in FIG. 6 includes a transmitter 601, a receiver 602, a controller/processor 603, a memory 604, and a modem processor 605.

The transmitter 601 is configured to send an uplink signal, where the uplink signal is transmitted to the network device in the foregoing embodiments by using an antenna. On a downlink, an antenna receives a downlink signal (DCI) transmitted by the network device in the foregoing embodiments. The receiver 602 is configured to receive the downlink signal (DCI) received by using the antenna. In the modem processor 605, an encoder 606 receives service data and a signaling message that are to be sent on an uplink, and processes the service data and the signaling message. A modulator 607 further processes (for example, performs symbol mapping and modulates) the encoded service data and the encoded signaling message, and provides an output sample. A demodulator 605 processes (for example, demodulates) the input sample and provides symbol estimation. A decoder 608 processes (for example, decodes) the symbol estimation and provides the decoded data and the decoded signaling message that are to be sent to the terminal device. The encoder 606, the modulator 607, the decoder 608, and the demodulator 609 may be implemented by the integrated modem processor 605. The units perform processing based on a radio access technology used in a radio access network.

The controller/processor 603 controls and manages an action of the terminal device and is configured to perform processing performed by the terminal device in the foregoing embodiment 200. For example, the receiver 602 is configured to receive at least two physical downlink control channels PDCCHs on at least two control information resources, where the at least two PDCCHs carry same downlink control information DCI, and the DCI is used to indicate a time-frequency resource corresponding to a first downlink channel. The controller/processor 603 is configured to obtain at least two transmission configuration indicators TCIs corresponding to the at least two control information resources, and determine a target TCI in the at least two TCIs, where the target TCI is a TCI corresponding to the first downlink channel. The receiver 602 is configured to receive the first downlink channel based on the DCI and the target TCI that is determined by the processing unit.

It should be understood that the terminal device 600 may be specifically the terminal device in the foregoing embodiments, and may be configured to perform the steps and/or processes that are in the foregoing method embodiments and that correspond to the terminal device. Optionally, the memory 604 may include a read-only memory and a random access memory, and provide instructions and data to the controller/processor 603. Apart of the memory 604 may further include a non-volatile random access memory. For example, the memory may further store information about a device type. The controller/processor 603 may be configured to execute the instructions stored in the memory, and when the controller/processor 603 executes the instructions stored in the memory, the controller/processor 603 is configured to perform the steps and/or processes of the method embodiments corresponding to the terminal device.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in the embodiments of this application. The general-purpose processor may be a microprocessor or any conventional processor or the like. The steps of the methods disclosed with reference to the embodiments of this application may be directly performed by a hardware processor, or may be performed by a combination of hardware and software modules in the processor.

In this embodiment of this application, the memory may be a non-volatile memory such as a hard disk drive (hard disk drive, HDD) or a solid-state drive (solid-state drive, SSD), or may be a volatile memory (volatile memory) such as a random access memory (random-access memory, RAM). The memory is any other medium that can be used to carry or store expected program code in a form of an instruction or a data structure and that can be accessed by a computer. However, this is not limited thereto. The memory in the embodiments of this application may alternatively be a circuit or any other apparatus that can implement a storage function, and is configured to store program instructions and/or data.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. The term "at least one of the following items (pieces)" or a similar expression thereof means any combination of these items, including any combination of singular items (pieces) or plural items (pieces). For example, at least one (piece) of a, b, or c may indicate the following cases: a, b, c, a and b, a and c, b and c, or a, b, and c, where a, b, and c may be singular or plural.

A person of ordinary skill in the art may be aware that, the method steps and the units described in the embodiments disclosed in this specification can be implemented by electronic hardware, computer software, or a combination thereof. To clearly describe interchangeability between the hardware and the software, the foregoing has generally described steps and compositions of each embodiment based on functions. Whether the functions are performed by the hardware or the software depends on particular applications and design constraints of the technical solutions. A person of ordinary skill in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments of this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Therefore, the protection scope of this application shall be subject to the protection scope of the claims.

## Claims

1. A downlink channel transmission method, comprising:
receiving (S220, S230), by a terminal device, at least two physical downlink control channels, PDCCHs, respectively sent by at least two transmission/reception points, TRPs, on at least two control information resources, wherein the at least two PDCCHs carry same downlink control information, DCI, and the DCI is used to indicate a time-frequency resource corresponding to a first downlink channel;
obtaining (S240), by the terminal device, at least two transmission configuration indicators, TCIs, corresponding to the at least two control information resources;
determining (S250), by the terminal device, a target TCI in the at least two TCIs,
wherein the target TCI is a TCI corresponding to the first downlink channel; and receiving, by the terminal device, the first downlink channel based on the DCI and the target TCI.

2. The method according to claim 1, wherein the determining (S250), by the terminal device, a target TCI in the at least two TCIs comprises:
determining, by the terminal device, the target TCI in the at least two TCIs based on at least one of the following information:
identifiers of search spaces in which the at least two PDCCHs are located;
types of search spaces in which the at least two PDCCHs are located;
monitoring periodicities corresponding to the at least two PDCCHs;
quantities of the control information resources corresponding to the at least two PDCCHs;
time domain positions of the control information resources corresponding to the at least two PDCCHs;
indexes of PDCCH candidates corresponding to the at least two PDCCHs;
indexes of control resource elements, CCEs, corresponding to the at least two PDCCHs;
indexes of resource element groups, REGs, corresponding to the at least two PDCCHs;
radio network temporary identifiers, RNTIs, corresponding to the at least two PDCCHs;
time differences between transmission times of the at least two PDCCHs and a transmission time of the first downlink channel;
indexes of the control information resources of the at least two PDCCHs; or
indexes of the at least two TCIs.

3. The method according to claim 1, wherein before the determining (S250), by the terminal device, a target TCI in the at least two TCIs, the method further comprises:
receiving, by the terminal device, higher layer signaling, wherein the higher layer signaling is used to indicate the target TCI.

4. The method according to any one of claims 1 to 3, wherein the DCI does not carry indication information used to indicate the TCI corresponding to the first downlink channel.

5. The method according to any one of claims 1 to 4, wherein a time difference between a transmission time of a PDCCH corresponding to the target TCI and the transmission time of the first downlink channel is greater than or equal to a first threshold.

6. The method according to any one of claims 1 to 5, wherein a time difference between a transmission time of a PDCCH that is last transmitted in the at least two PDCCHs and the transmission time of the first downlink channel is greater than or equal to a second threshold; or
a time difference between a transmission time of a PDCCH that is first transmitted in the at least two PDCCHs and the transmission time of the first downlink channel is greater than or equal to a second threshold.

7. The method according to any one of claims 1 to 6, further comprising:
sending, by the terminal device, capability information, wherein the capability information is used to indicate that the terminal device is capable of receiving at least two PDCCHs; and/or
receiving, by the terminal device, first configuration information, wherein the first configuration information is used to configure the terminal device to receive at least two PDCCHs.

8. The method according to any one of claims 1 to 7, wherein the determining (S250), by the terminal device, a target TCI in the at least two TCIs comprises:
determining, by the terminal device, the target TCI in the at least two TCIs when at least one of the following conditions is satisfied:
an RNTI used to scramble the at least two PDCCHs is a first RNTI;
a search space corresponding to the at least two PDCCHs is a first search space;
a format of the DCI is a first DCI format;
the at least two control information resources belong to a first control information resource group; or
a bit status of a priority bit field of the DCI is a first bit status.

9. A downlink channel transmission apparatus, comprising a memory and a processor, wherein the memory is configured to store a computer program, and when the processor invokes the computer program in the memory, the communications apparatus performs the method according to any one of claims 1 to 8.

## Patentansprüche

1. "Downlink"-Kanal-Übertragungsverfahren, umfassend:
Empfangen (S220, S230) von mindestens zwei physikalischen "Downlink"-Steuerkanälen, PDCCH, durch eine Endgerätevorrichtung, die jeweils durch mindestens zwei Sende-/Empfangspunkte, TRP, auf mindestens zwei Steuerinformationsressourcen gesendet werden, wobei die mindestens zwei PDCCH dieselben "Downlink"-Steuerinformationen, DCI, tragen und die DCI dazu verwendet werden, eine Zeit-Frequenz-Ressource anzugeben, die einem ersten "Downlink"-Kanal entspricht,
Erhalten (S240) von mindestens zwei Übertragungskonfigurationsindikatoren, TCI, durch die Endgerätevorrichtung, die den mindestens zwei Steuerinformationsressourcen entsprechen;
Bestimmen (S250) eines Ziel-TCI in den mindestens zwei TCI durch die Endgerätevorrichtung, wobei der Ziel-TCI ein TCI ist, der dem ersten "Downlink"-Kanal entspricht, und
Empfangen des ersten "Downlink"-Kanals durch die Endgerätevorrichtung basierend auf den DCI und dem Ziel-TCI.

2. Verfahren gemäß Anspruch 1, wobei das Bestimmen (S250) eines Ziel-TCI in den mindestens zwei TCI durch die Endgerätevorrichtung umfasst:
Bestimmen des Ziel-TCI in den mindestens zwei TCI durch die Endgerätevorrichtung basierend auf mindestens einer der folgenden Informationen:
Kennungen der Suchräume, in denen sich die mindestens zwei PDCCH befinden;
Arten von Suchräumen, in denen sich die mindestens zwei PDCCH befinden;
Überwachen von Periodizitäten, die den mindestens zwei PDCCH entsprechen;
Mengen der Steuerinformationsressourcen, die den mindestens zwei PDCCH entsprechen;
Zeitbereichspositionen der Steuerinformationsressourcen, die den mindestens zwei PDCCH entsprechen;
Indizes der PDCCH-Kandidaten, die den mindestens zwei PDCCH entsprechen;
Indizes der Steuerressourcenelemente, CCE, die den mindestens zwei PDCCH entsprechen;
Indizes von Ressourcenelementgruppen, REG, die den mindestens zwei PDCCH entsprechen;
temporäre Funknetzkennungen, RNTI, die den mindestens zwei PDCCH entsprechen;
Zeitdifferenzen zwischen den Übertragungszeiten der mindestens zwei PDCCH und
einer Übertragungszeit des ersten "Downlink"-Kanals;
Indizes der Steuerinformationsressourcen der mindestens zwei PDCCH; oder
Indizes der mindestens zwei TCI.

3. Verfahren gemäß Anspruch 1, wobei vor dem Bestimmen (S250) eines Ziel-TCI in den mindestens zwei TCI durch die Endgerätevorrichtung das Verfahren ferner umfasst:
Empfangen einer Signalisierung auf einer höheren Schicht durch die Endgerätevorrichtung, wobei die Signalisierung auf der höheren Schicht zum Angeben des Ziel-TCI verwendet wird.

4. Verfahren gemäß einem der Ansprüche 1 bis 3, wobei die DCI keine Angabeinformationen enthalten, die zum Angeben des dem ersten "Downlink"-Kanal entsprechenden TCI verwendet werden.

5. Verfahren gemäß einem der Ansprüche 1 bis 4, wobei eine Zeitdifferenz zwischen einer Sendezeit eines PDCCH, die dem Ziel-TCI entspricht, und der Sendezeit des ersten "Downlink"-Kanals größer als oder gleich einem ersten Schwellenwert ist.

6. Verfahren gemäß einem der Ansprüche 1 bis 5, wobei eine Zeitdifferenz zwischen einer Übertragungszeit eines PDCCH, der zuletzt in den mindestens zwei PDCCHs übertragen wurde, und der Übertragungszeit des ersten "Downlink"-Kanals größer als oder gleich einem zweiten Schwellenwert ist; oder
eine Zeitdifferenz zwischen einer Übertragungszeit eines PDCCH, der zuerst in den mindestens zwei PDCCH übertragen wird, und der Übertragungszeit des ersten "Downlink"-Kanals größer als oder gleich einem zweiten Schwellenwert ist.

7. Verfahren gemäß einem der Ansprüche 1 bis 6, ferner umfassend:
Senden von Fähigkeitsinformationen durch die Endgerätevorrichtung, wobei die Fähigkeitsinformationen zum Angeben verwendet werden, dass die Endgerätevorrichtung in der Lage ist, mindestens zwei PDCCH zu empfangen; und/oder
Empfangen von ersten Konfigurationsinformationen durch die Endgerätevorrichtung, wobei die ersten Konfigurationsinformationen dazu verwendet werden, die Endgerätevorrichtung für das Empfangen von mindestens zwei PDCCH zu konfigurieren.

8. Verfahren gemäß einem der Ansprüche 1 bis 7, wobei das Bestimmen (S250) eines Ziel-TCI in den mindestens zwei TCI durch die Endgerätevorrichtung umfasst:
Bestimmen des Ziel-TCI in den mindestens zwei TCI durch die Endgerätevorrichtung, wenn mindestens eine der folgenden Bedingungen erfüllt ist:
eine RNTI, die zum Verwürfeln der mindestens zwei PDCCH verwendet wird, ist eine erste RNTI;
ein Suchraum, der den mindestens zwei PDCCH entspricht, ist ein erster Suchraum,
ein Format der DCI ist ein erstes DCI-Format;
die mindestens zwei Steuerinformationsressourcen gehören zu einer ersten Steuerinformationsressourcengruppe; oder
ein Bitstatus eines Prioritätsbitfeldes der DCI ist ein erster Bitstatus.

9. "Downlink"-Kanal-Übertragungsvorrichtung, die einen Speicher und einen Prozessor umfasst, wobei der Speicher dazu ausgelegt ist, ein Computerprogramm zu speichern, und wenn der Prozessor das Computerprogramm im Speicher aufruft, die Kommunikationsvorrichtung das Verfahren gemäß einem der Ansprüche 1 bis 8 durchführt.

## Revendications

1. Procédé d'émission de canal en liaison descendante, comprenant les étapes consistant à :
recevoir (S220, S230), par un dispositif terminal, au moins deux canaux physiques de commande en liaison descendante (PDCCH) envoyés respectivement par au moins deux points d'émission/réception (TRP) sur au moins deux ressources d'informations de commande, les au moins deux PDCCH transportant des informations de commande en liaison descendante (DCI) identiques et les DCI étant utilisées pour indiquer une ressource temps-fréquence correspondant à un premier canal en liaison descendante ;
obtenir (S240), par le dispositif terminal, au moins indicateurs de configuration d'émission (TCI) correspondant aux au moins deux ressources d'informations de commande ;
déterminer (S250), par le dispositif terminal, un TCI cible parmi les au moins deux TCI, le TCI cible étant un TCI correspondant au premier canal en liaison descendante ; et
recevoir, par le dispositif terminal, le premier canal en liaison descendante sur la base des DCI et du TCI cible.

2. Procédé selon la revendication 1, dans lequel la détermination (S250), par le dispositif terminal, d'un TCI cible parmi les au moins deux TCI comprend l'étape consistant à :
déterminer, par le dispositif terminal, le TCI cible parmi les au moins deux TCI sur la base d'au moins une des informations suivantes :
des identifiants d'espaces de recherche où se trouvent les au moins deux PDCCH ;
des types d'espaces de recherche où se trouvent les au moins deux PDCCH ;
des périodicités de surveillance correspondant aux au moins deux PDCCH ;
des nombres des ressources d'informations de commande correspondant aux au moins deux PDCCH ;
des positions dans le domaine temporel des ressources d'informations de commande correspondant aux au moins deux PDCCH ;
des indices de PDCCH candidats correspondant aux au moins deux PDCCH ;
des indices d'éléments de ressource de commande (CCE) correspondant aux au moins deux PDCCH ;
des indices de groupes d'éléments de ressource (REG) correspondant aux au moins deux PDCCH ;
des identifiants temporaires de réseau radio (RNTI) correspondant aux au moins deux PDCCH;
des différences de temps entre des temps d'émission des au moins deux PDCCH et un temps d'émission du premier canal en liaison descendante ;
des indices des ressources d'informations de commande des au moins deux PDCCH ; ou
des indices des au moins deux TCI.

3. Procédé selon la revendication 1, le procédé comprenant en outre, avant la détermination (S250), par le dispositif terminal, d'un TCI cible parmi les au moins deux TCI, l'étape consistant à :
recevoir, par le dispositif terminal, une signalisation de couche supérieure, la signalisation de couche supérieure étant utilisée pour indiquer le TCI cible.

4. Procédé selon l'une quelconque des revendications 1 à 3, dans lequel les DCI ne transportent pas d'informations d'indication utilisées pour indiquer le TCI correspondant au premier canal en liaison descendante.

5. Procédé selon l'une quelconque des revendications 1 à 4, dans lequel une différence de temps entre un temps d'émission d'un PDCCH correspondant au TCI cible et le temps d'émission du premier canal en liaison descendante est supérieure ou égale à un premier seuil.

6. Procédé selon l'une quelconque des revendications 1 à 5, dans lequel une différence de temps entre un temps d'émission d'un PDCCH qui est émis en dernier parmi les au moins deux PDCCH et le temps d'émission du premier canal en liaison descendante est supérieure ou égale à un second seuil ; ou
une différence de temps entre un temps d'émission d'un PDCCH qui est émis en premier parmi les au moins deux PDCCH et le temps d'émission du premier canal en liaison descendante est supérieure ou égale à un second seuil.

7. Procédé selon l'une quelconque des revendications 1 à 6, comprenant en outre les étapes consistant à :
envoyer, par le dispositif terminal, des informations de capacité, les informations de capacité étant utilisées pour indiquer que le dispositif terminal est capable de recevoir au moins deux PDCCH ; et/ou
recevoir, par le dispositif terminal, des premières informations de configuration, les premières informations de configuration étant utilisées pour configurer le dispositif terminal pour qu'il reçoive au moins deux PDCCH.

8. Procédé selon l'une quelconque des revendications 1 à 7, dans lequel la détermination (S250), par le dispositif terminal, d'un TCI cible parmi les au moins deux TCI comprend l'étape consistant à :
déterminer, par le dispositif terminal, le TCI cible parmi les au moins deux TCI lorsque au moins une des conditions suivantes est satisfaite :
un RNTI utilisé pour embrouiller les au moins deux PDCCH est un premier RNTI ;
un espace de recherche correspondant aux au moins deux PDCCH est un premier espace de recherche ;
un format des DCI est un premier format de DCI ;
les au moins deux ressources d'informations de commande appartiennent à un premier groupe de ressources d'informations de commande ; ou
un état binaire d'un champ binaire de priorité des DCI est un premier état binaire.

9. Appareil d'émission de canal en liaison descendante, comprenant une mémoire et un processeur, la mémoire étant configurée pour stocker un programme informatique, et l'appareil de communication, lorsque le processeur appelle le programme informatique dans la mémoire, effectuant le procédé selon l'une quelconque des revendications 1 à 8.
